(19) Europäisches Patentamt
European Patent Office
Office européen des brevets

(11) **EP 3 006 983 B1**

(12) **EUROPÄISCHE PATENTSCHRIFT**

(45) Veröffentlichungstag und Bekanntmachung des Hinweises auf die Patenterteilung:
**16.05.2018 Patentblatt 2018/20**

(21) Anmeldenummer: **15187833.7**

(22) Anmeldetag: **01.10.2015**

(51) Int Cl.:
**G02B 21/26** *(2006.01)*     **G02B 21/24** *(2006.01)*
**G02B 7/00** *(2006.01)*

(54) **DIGITALES MIKROSKOP MIT KLICKSTOPP**

DIGITAL MICROSCOPE WITH CLICK STOP

MICROSCOPE NUMÉRIQUE AVEC UN RACCORD PAR ENCLIQUETAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2014 DE 102014114479**

(43) Veröffentlichungstag der Anmeldung:
**13.04.2016 Patentblatt 2016/15**

(73) Patentinhaber: **Leica Microsystems (Schweiz) AG 9435 Heerbrugg (CH)**

(72) Erfinder: **MARTE, Christian
6850 Dornbirn (AT)**

(74) Vertreter: **Schaumburg und Partner Patentanwälte mbB
Postfach 86 07 48
81634 München (DE)**

(56) Entgegenhaltungen:
**EP-A2- 1 248 133     JP-A- 2005 143 970
JP-A- 2012 018 813**

**Beschreibung**

Die Erfindung betrifft ein digitales Mikroskop, das einen stationären Stativgrundkörper und eine Schwenkeinheit umfasst, die auf einer Welle des Stativgrundkörpers um die Längsachse dieser Welle verschwenkbar gelagert ist. Die Schwenkeinheit weist eine Bilderfassungseinheit zur Aufnahme von Bildern zu mikroskopierende Objekte auf. Ferner hat das Mikroskop eine Bremseinheit zum Bremsen und/oder Feststellen der Schwenkeinheit sowie ein Betätigungselement zum Lösen dieser Bremseinheit.

Hochwertige digitale Mikroskope umfassen einen stationären Stativgrundkörper, über den das Mikroskop auf seiner Standfläche gelagert ist, sowie eine schwenkbare Grundeinheit, in der die Bilderfassungseinheit und ein Objektivsystems aufgenommen sind. Diese verschwenkbare Schwenkeinheit ist relativ zum Stativgrundkörper um eine Drehachse verschwenkbar, so dass die zu mikroskopierenden Objekte aus verschiedenen Winkeln betrachtet werden können, was insbesondere zur Tiefenbeurteilung sinnvoll sein kann.

Wenn die Schwenkeinheit einmal aus der Position, in der die Schwenkeinheit gerade über den Mikroskoptisch angeordnet ist, also bei der der Strahlengang vertikal gerichtet ist, bewegt wurde, so ist es bei manuell verstellbare Mikroskopen schwer, diese wieder exakt in dieser Position zu positionieren. Zwar kann ein ungefähres Positionieren in der Ausgangsposition durch die Bedienperson leicht durchgeführt werden, eine genaue Positionierung ist aber nur schwer abzuschätzen. Bei manchen Anwendungsfällen ist es jedoch notwendig, dass die Schwenkeinheit möglichst genau in der Ausgangsposition angeordnet ist.

Eine Möglichkeit dieses Problem zu umgehen ist es, motorisch verstellbare Schwenkeinheiten zu verwenden, bei der die Ausgangsposition entsprechend über den Motor angesteuert werden kann. Solche motorischen Systeme haben jedoch den Nachteil, dass diese kostenaufwendig und bauraumintensiv sind. Ferner wird für ein Verstellen der Schwenkeinheit immer elektrischer Strom benötigt.

Zum Stand der Technik wird auf die Druckschriften JP 2012 018812 A, EP 1248 133 A2 und JP 2005 143970 A verwiesen, die jeweils ein Mikroskop mit einem stationären Stativgrundkörper, einer auf dem Stativgrundkörper gelagerten Schwenkeinheit sowie einer Bremseinheit zum Bremsen und/oder Feststellen der Schwenkeinheit aufweisen.

Es ist Aufgabe der Erfindung, ein digitales Mikroskop anzugeben, deren Schwenkeinheit auf einfache Weise in einer vorbestimmten Nullposition positionierbar ist und das einfach bedienbar ist.

Diese Aufgabe wird durch ein digitales Mikroskop mit den Merkmalen des Anspruchs 1 gelöst. Vorteilhafte Weiterbildungen der Erfindung sind in den abhängigen Ansprüchen angegeben.

Erfindungsgemäß umfasst die Schwenkeinheit ein erstes Verbindungselement, beispielsweise ein Rastelement, und der Stativkörper ein komplementär zu diesem ersten Verbindungselement ausgebildetes zweites Verbindungselement, beispielsweise ein zweites Rastelement. Wenn die Schwenkeinheit in einer vorbestimmten Nullposition angeordnet ist, sind das erste Verbindungselement und das zweite Verbindungselement miteinander gekoppelt, sofern das Betätigungselement in einer unbetätigten Grundposition angeordnet ist oder das Betätigungselement innerhalb eines vorbestimmten ersten Betätigungsbereiches betätigt ist. Beispielsweise rastet das erste Verbindungselement in das zweite Verbindungselement ein.

Durch das Koppeln des ersten und des zweiten Verbindungselementes wird erreicht, dass eine Bedienperson des Mikroskopes die Nullposition jederzeit wieder leicht auffinden kann. Insbesondere kann die Bedienperson, wenn die Schwenkeinheit zuvor aus der Nullposition heraus bewegt worden war, diese bei innerhalb des ersten Betätigungsbereichs betätigten Betätigungselement so lange bewegen, bis eine Verbindung des ersten Verbindungselement mit dem zweiten Verbindungselement erfolgt. Durch die Verbindung, vorzugsweise durch ein Rastverbindung, wird der Bedienperson unmittelbar und intuitiv signalisiert, dass die Schwenkeinheit in der Nullposition angeordnet ist.

Die Nullposition ist insbesondere diejenige Position, bei der die optische Achse des Mikroskopes bzw. der Strahlengang des Mikroskops senkrecht zur Oberfläche des Mikroskoptischs, auf dem die zu mikroskopierende Objekte anordenbar sind, angeordnet ist. In dieser Nullposition wird auch der Zoom des Mikroskops in Bezug auf die Oberfläche des Mikroskoptischs kalibriert. Alternativ kann die Nullposition auch jede andere vorbestimmte Position sein. Die Nullposition kann somit insbesondere auch eine Position sein , bei der die optische Achse des Mikroskopes bzw. der Strahlengang des Mikroskops nicht senkrecht zur Oberfläche des Mikroskoptischs, auf dem die zu mikroskopierende Objekte anordenbar sind, angeordnet ist.

Die Nullposition ist insbesondere derart gewählt, dass die Schwenkeinheit ausgehend von der Nullposition in beide Richtungen um den gleichen Winkel geschwenkt werden kann, so dass die Nullposition die mittige Position darstellt.

Die Bremseinheit ist insbesondere innerhalb der Schwenkeinheit angeordnet, so dass die Bremseinheit mit verschwenkt wird. Wenn die Schwenkeinheit in der Nullposition angeordnet ist und wenn das Betätigungselement innerhalb eines vorbestimmten zweiten Betätigungsbereiches, der vom ersten Betätigungsbereich verschieden ist und sich mit diesem auch nicht überschneidet, betätigt ist, ist das erste Verbindungselement nicht mit dem zweiten Verbindungselement gekoppelt, beispielsweise sind nicht diese miteinander verrastet. Hierdurch wird erreicht, dass die Bedienperson in Abhängigkeit davon, wie weit sie das Betätigungselement betätigt, wählen kann, ob beim Bewegen in die Nullposition ein Koppeln der Verbindungselemente erfolgen soll oder nicht. Durch diesen zweiten Betätigungsbereich wird insbesondere sichergestellt, dass die Schwenkeinheit von der einen Seite über die Nullposition hinaus zur anderen Seite bewegt werden kann, ohne dass ein Koppeln erfolgt. Dies ist insbesondere bei Videoaufnahmen über die Bilderfassungseinheit sehr sinnvoll, da ansonsten über das beispielsweise Einrasten, d.h. beim Koppeln der Verbindungselemente, Vibrationen und Erschütterungen entstehen könnten. Darüber hinaus führt das Koppeln bei Bedienpersonen in der Regel intuitiv dazu, dass sie in diesem Bereich die ausgeübte Kraft und somit die Geschwindigkeit, mit der die Schwenkeinheit von ihnen bewegt wird, verändern, was ebenfalls Unregelmäßigkeiten bei Videoaufnahmen erzeugen würde.

Der erste Betätigungsbereich ist insbesondere zwischen der Grundposition und dem zweiten Betätigungsbereich angeordnet. Ferner ist es vorteilhaft, wenn der erste Betätigungsbereich sich unmittelbar an die Grundposition und der zweite Betätigungsbereich unmittelbar an den ersten Betätigungsbereich anschließt.

In Abhängigkeit der Betätigung des Betätigungselementes wird insbesondere auch die Bremseinheit unterschiedlich weit gelöst, d.h., dass in Abhängigkeit davon, wie weit das Betätigungselement betätigt wird, die erzeugte Bremskraft stufenlos verstellt werden kann. Somit kann durch die Vorgabe von zwei Betätigungsbereichen und nicht nur einzelner Betätigungspunkte, innerhalb der Betätigungsbereiche jeweils die Bremskraft geregelt werden.

Innerhalb des ersten Betätigungsbereiches übt die Bremseinheit insbesondere zwar eine Bremskraft aus, diese ist aber nur so groß, dass dennoch ein Verstellen der Schwenkeinheit möglich ist. Ist dagegen das Betätigungselement in seiner Grundposition, also unbetätigt, so ist die Bremskraft so stark, dass ein Verschwenken der Schwenkeinheit nicht möglich ist.

Das Betätigungselement kann insbesondere um einen vorbestimmten maximalen Betätigungsweg betätigt werden. Die beiden Betätigungsbereiche sind insbesondere derart gewählt, dass der erste Betätigungsbereich in etwa die sich an die Grundposition anschließende erste Hälfte des maximalen Betätigungsweges und der zweite Betätigungsbereich die sich an die erste Hälfte anschließende zweite Hälfte des maximalen Betätigungsweges abdeckt.

Hierdurch wird erreicht, dass sowohl für den ersten als auch für den zweiten Betätigungsbereich ein ausreichender Spielraum für Verfügung steht und ein einfaches intuitives Bedienen durch die Bedienperson erzielt wird.

Der Übergang zwischen den beiden Betätigungsbereichen kann insbesondere fließend sein.

Ferner ist es vorteilhaft, wenn bei einer Betätigung des Betätigungselementes sowohl innerhalb des ersten als auch innerhalb des zweiten Betätigungsbereichs die Bremseinheit zumindest so weit gelöst ist, dass ein Verschwenken der Schwenkeinheit möglich ist.

Die Verbindung zwischen dem ersten und dem zweiten Verbindungselement ist insbesondere derart ausgebildet, dass sich die Verbindung beim Verschwenken der Schwenkeinheit aus der Nullposition automatisch löst und/oder umgekehrt beim Schwenken der Schwenkeinheit von einer Position außerhalb der Nullposition in die Nullposition hinein automatisch hergestellt wird, sofern das Betätigungselement jeweils innerhalb des ersten Betätigungsbereiches betätigt ist. Mit diesem automatischen Lösen und Herstellen der Rastverbindung wird erreicht, dass hierfür keine Bedienung notwendig ist, sondern dies beim Verschwenken der Schwenkeinheit automatisch jeweils beim Hineinbewegen in die bzw. Hinausbewegen aus der Nullposition erfolgt. Somit soll über die Rastverbindung keine Feststellwirkung erzeugt werden, sondern lediglich eine Positionsanzeige erreicht werden.

Insbesondere ist die Verbindung derart ausgebildet, dass beim Lösen und Wiederherstellen der Verbindung, beispielsweise der Rastverbindung, durch Schwenken der Schwenkeinheit ein akustisches, haptisches und/oder optisches Signal, insbesondere ein "Klicken", ausgegeben wird. Hierüber kann die Bedienperson sehr einfach und intuitiv die Nullposition wahrnehmen. Insbesondere ist dieses Signal derart ausgebildet, dass dafür keine elektrischen Bauteile notwendig sind, sondern es rein durch die mechanische Herstellung der Verbindung, beispielsweise der Rastverbindung, ausgegeben wird.

Die Verbindung, beispielsweise eine Rastverbindung, ist insbesondere in Form eines sogenannten Klickstopps ausgebildet, der durch ein entsprechendes "Klicken" die Nullposition anzeigt.

Bei einer besonders bevorzugten Ausführungsform ist das erste Verbindungselement, beispielsweise ein Rastelement, entlang eines vorbestimmten Weges bewegbar, insbesondere linear verschiebbar, angeordnet. Wenn das Betätigungselement in seiner Grundposition angeordnet ist, also wenn das Betätigungselement nicht betätigt ist, ist das erste Verbindungselement in einer Ausgangsposition angeordnet, in der es in das zweite Verbindungselement, beispielsweise ein zweites Rastelement, eingreift, sofern die Schwenkeinheit in der Nullposition angeordnet ist. Ferner ist das Verbindungselement derart ausgebildet und/oder derart mit dem Betätigungselement gekoppelt, dass bei einer Betätigung des Betätigungselementes innerhalb des ersten Betätigungsbereiches das erste Verbindungselement höchstens so weit aus seiner Ausgangsposition hinaus bewegt wird, dass es zumindest teilweise in das zweite Verbindungselement einkoppelt, beispielsweise einrastet, immer vorausgesetzt, dass die Schwenkeinheit in der Nullposition angeordnet ist. Es ist besonders vorteilhaft, wenn die Kopplung rein mechanisch erfolgt, so dass das Verstellen auch ohne elektrischen Strom möglich ist. Darüber hinaus ist es besonders vorteilhaft, wenn das erste Verbindungselement bei einer Betätigung des Betätigungselementes innerhalb des ersten Betätigungsbereiches vollständig in seiner Ausgangsposition verbleibt, so dass immer die Verbindung hergestellt wird.

Bei einer Betätigung des Betätigungsbereiches innerhalb des zweiten Betätigungsbereiches dagegen ist das erste Verbindungselement, beispielsweise Rastelement, so weit aus seiner Ausgangsposition hinausbewegt, dass es sich nicht mehr mit dem zweiten Verbindungselement, beispielsweise Rastelement, verbindet, beispielsweise einrastet, selbst wenn die Schwenkeinheit in der Nullposition angeordnet ist.

Auf diese Art kann auf einfache Weise erreicht werden, dass ein Einrasten nur bei einer Betätigung innerhalb des ersten Betätigungsbereiches erfolgt und somit je nach Betätigung gewählt werden kann, ob die Nullposition "überfahren" werden soll oder ob ein Signal ausgegeben werden soll.

Es ist besonders vorteilhaft, wenn das erste Verbindungselement, beispielsweise Rastelement, über ein elastisches Element in der Ausgangsposition vorgespannt ist. Hierdurch wird erreicht, dass es sich automatisch immer wieder in die Ausgangsposition zurück bewegt. Darüber hinaus wird hierdurch erreicht, dass das Verbindungselement, wenn es zuvor nicht in der Ausgangsposition angeordnet war, beispielsweise weil die Schwenkeinheit nicht in der Nullposition angeordnet ist, automatisch in diese Ausgangsposition bewegt wird. Ist die Schwenkeinheit außerhalb der Nullposition angeordnet, so ist das erste Verbindungselement insbesondere entgegen der Rückstellkraft des elastischen Elements durch den Kontakt zu einer Anlagefläche aus der Ausgangsposition hinaus bewegt. Wird die Schwenkeinheit in der Nullposition bewegt, so dass das erste Verbindungselement in den Bereich des zweiten Verbindungselementes gelangt, so wird es über die Rückstellkraft des elastischen Elementes in dieses zweite Verbindungselement hinein und somit in die Ausgangsposition bewegt. Entsprechend wird umgekehrt bei Bewegen der Schwenkeinheit aus der Nullposition heraus bei innerhalb des ersten Betätigungselementbereiches betätigten Betätigungselement das erste Verbindungselement über den Kontakt zum zweiten Verbindungselement und/oder der Anlagefläche entgegen der Rückstellkraft der Feder wieder aus der Ausgangsposition bewegt.

Bei dem elastischen Element handelt es sich insbesondere um eine Feder, beispielsweise eine Druckfeder. Hierdurch wird ein besonders einfacher Aufbau erreicht.

Das erste Verbindungselement ist insbesondere als ein Stift ausgebildet. Das zweite Verbindungselement ist entsprechend komplementär als eine Aussparung, insbesondere als eine Aussparung innerhalb einer koaxial zur Welle angeordneten Scheibe, ausgebildet. Ist das Betätigungselement nicht oder nur innerhalb des ersten Betätigungsbereiches betätigt, so rastet der Stift in die Aussparung ein, sofern die Schwenkeinheit in der Nullposition angeordnet ist. Der Stift hat insbesondere ein abgerundetes, insbesondere ein halbkugelförmiges, Ende, mit dem es in die Aussparung eingreift. Entsprechend hat auch die Aussparung insbesondere eine abgeschrägte, abgerundete oder halbkugelförmige Form. Hierdurch wird erreicht, dass beim Bewegen der Schwenkeinheit aus der Nullposition hinaus das erste Verbindungselement durch diese Abschrägung aus seiner Ausgangsposition hinaus bewegt wird. Insbesondere wird somit ein Verkanten und eine Sperrwirkung der Verbindung, beispielsweise Rastverbindung, vermieden. Vorzugsweise wird durch diese Abschrägung oder Abrundung sichergestellt, dass durch die Rastverbindung keine Feststellung erfolgt, sondern nur eine Signalisierung der Nullposition.

Es ist besonders vorteilhaft, wenn der Stift ein Langloch aufweist, in das ein mit dem Betätigungselement fest verbundener weiterer Stift eingreift, wobei das Langloch derart ausgebildet ist, dass der weitere Stift bei einer Betätigung des Betätigungselementes innerhalb des ersten Betätigungsbereiches innerhalb des Langloches bewegt wird, ohne dass der eine Stift, also das erste Verbindungselement, hierdurch bewegt wird. Hierdurch wird erreicht, dass bei einer Betätigung des Betätigungselementes innerhalb des ersten Betätigungsbereiches das erste Verbindungselement in seine Ausgangsposition belassen wird oder somit die Verbindung zum zweiten Verbindungselement hergestellt wird.

Ferner ist es vorteilhaft, wenn die Bremseinheit ein mit Hilfe eines weiteren elastischen Elementes in einer Bremsposition vorgespanntes Bremselement umfasst, das in der Bremsposition die Welle kontaktiert. Dieses Bremselement ist durch manuelle Betätigung des Betätigungselementes entgegen der Rückstellkraft des weiteren elastischen Elementes von der Bremsposition in eine gelöste Position bewegbar. Ferner ist das Betätigungselement über eine Kopplungseinheit mit dem Bremselement gekoppelt. Bei dieser gelösten Position ist insbesondere ein Verschwenken der Schwenkeinheit um die Längsachse der Welle möglich.

Bei einer bevorzugten Ausführungsform ist das Betätigungselement ist mit Hilfe einer Kopplungseinheit rein mechanisch mit dem Bremselement gekoppelt. Alternativ oder zusätzlich ist auch eine magnetische und/oder elektrische Kopplung möglich.

Durch die vorzugsweise rein mechanische Kopplung wird der Vorteil erreicht, dass ein Verschwenken der Schwenkeinheit auch ohne Zuführung von elektrischem Strom möglich ist. Durch das elastische Element wird ferner sichergestellt, dass die Bremseinheit automatisch die Schwenkeinheit immer feststellt, indem, ohne Betätigung des Betätigungselementes, das Bremselement immer in der Bremsposition angeordnet ist und somit die notwendige Bremskraft ausübt. Somit kann ein unbeabsichtigtes Verschwenken der Schwenkeinheit nicht passieren, so dass Sach- und Personenschäden vorgebeugt wird. Darüber hinaus ermöglicht ein solches rein mechanisch gekoppeltes Bremselement, das über den Kontakt mit der Welle und somit die hierdurch entstehende Reibkraft seine bremsende Wirkung erzeugt, dass die Bremskraft vom Bediener stufenlos reguliert werden kann, je nachdem wie weit er das Betätigungselement tatsächlich betätigt. Hierüber ist insbesondere eine Feineinstellung der Position der Schwenkeinheit möglich. Hierzu wird das Betätigungselement nur minimal betätigt, so dass immer noch eine Bremskraft ausgeübt wird, diese jedoch nur so groß ist, dass nichts destotrotz ein Verstellen der Schwenkeinheit möglich ist, wobei hierbei durch die Bedienperson nicht die gesamte Gewichtskraft der Schwenkeinheit gehalten werden muss, sondern diese zum großen Teil durch die Bremskraft aufgebracht wird. Somit kann sich die Bedienperson auf die konkrete Feinpositionierung konzentrieren und diese wesentlich genauer vornehmen, als wenn sie die gesamte Schwenkeinheit halten müsste.

Die Bremskraft wird insbesondere durch die Reibverbindung zwischen dem Bremselement und der Welle erzeugt. Hierbei hängt die Bremskraft insbesondere davon ab, mit welcher Kraft das Bremselement gegen die Welle gedrückt wird. Diese Kraft wiederum wird durch das elastische Element aufgebracht, wobei bei einer Betätigung des Betätigungselementes eine entgegen der Rückstellkraft des elastischen Elementes gerichtete Kraft aufgebracht wird, wodurch die resultierende, von dem Bremselement auf die Welle wirkende Kraft verringert wird, so dass auch eine geringere Bremskraft erzeugt wird. Dies ermöglicht das zuvor beschriebene stufenlose Regulieren der Bremskraft.

Bei einer besonders bevorzugten Ausführungsform der Erfindung umfasst die Bremseinheit mehrere über jeweils ein elastisches Element in der Bremsposition vorgespannte Bremselemente. Hierbei sind alle Bremselemente derart mit dem Betätigungselement gekoppelt, dass diese mit Hilfe des Betätigungselementes von der Bremsposition in die gelöste Position bewegbar sind. Durch das Vorsehen mehrerer Bremselemente, die insbesondere an verschiedenen Stellen der Welle angeordnet sind, wird erreicht, dass eine größere, und insbesondere gleichmäßig verteilte, Bremskraft erreicht wird, so dass das Bremsen und die Feststellung der Schwenkeinheit zuverlässig und sicher erfolgen kann.

Die Bremselemente sind insbesondere gleich ausgebildet. Auch die elastischen Elemente sind vorzugsweise gleich ausgebildet. Alternativ können auch bei einer Ausführungsform unterschiedliche Bremselement und/oder unterschiedliche elastische Elemente verwendet werden. Die im folgenden beschriebenen Merkmale, mit denen die Bremselemente und die elastischen Elemente weitergebildet werden können, können bei Ausführungsformen mit mehreren Bremselementen sowohl für alle Bremselemente als auch jeweils nur für einen Teil der Bremselemente verwendet werden. Insbesondere können verschiedene Bremselemente mit einem Teil der nachfolgend beschriebenen Merkmale miteinander kombiniert werden.

Durch die Kopplung aller Bremselemente mit einem einzigen Betätigungselement wird erreicht, dass die Bedienperson entsprechend auch nur ein Betätigungselement betätigen muss und somit eine besonders einfache Bedienung gewährleistet ist. Das Bremselement bzw. die Bremselemente sind insbesondere als Radialkolben ausgebildet, d.h. Kolben, die radial gerichtete Kräfte auf die Welle ausüben, sofern sie gegen diese gedrückt werden. Durch solche Radialkolben wird zum einen ein besonders einfacher Aufbau erreicht und zum anderen eine sehr gute Kraftübertragung auf die Welle gewährleistet.

Der Radialkolben bzw. die Radialkolben haben vorzugsweise jeweils eine um einen vorbestimmten Winkel abgeschrägten Kontaktbereich zum Kontaktieren der Welle, wobei die Kraft von dem Radialkolben insbesondere über diesen Kontaktbereich aufgebracht wird. Bei einem abgeschrägten Bereich erfolgt die Kraftübertragung insbesondere entlang einer Linie. Der Kontaktbereich ist vorzugsweise um einen Winkel zwischen 20° und 45°, insbesondere um etwa 30°, relativ zur Mantelfläche des Radialkolbens abgeschrägt. Entsprechend hat er zur Stirnfläche insbesondere einen Winkel zwischen 45° und 70°, vorzugsweise von 60°.

Bei einer alternativen Ausführungsform der Erfindung kann der Kontaktbereich auch eine andere Form aufweisen. Insbesondere kann der Kontaktbereich auch zylindersegmentförmig ausgebildet sein und insbesondere genau auf den Durchmesser der Welle abgestimmt werden, so dass ein sehr großer Kontaktbereich erzielt wird und die Kraft somit nicht nur entlang einer Linie sondern auf eine großen Fläche übertragen werden kann. Hierdurch wird ein noch sicherer und gleichmäßigerer Kraftübertrag und eine bessere Brems- und Feststellwirkung erzielt.

Das elastische Element bzw. die elastischen Elemente, über das bzw. die die Bremselemente in der Bremsposition vorgespannt ist bzw. sind, sind insbesondere als Federn, vorzugsweise als Druckfedern, ausgebildet. Hierdurch wird ein besonders einfacher und sicherer Aufbau erreicht. Alternativ können beispielsweise auch Gummiblöcke verwendet werden.

Bei einer besonders bevorzugten Ausführungsform ist das Bremselement stufenlos von der Bremsposition in die gelöste Position bewegbar, so dass in Abhängigkeit der Position des Bremselementes jeweils eine unterschiedliche Bremskraft aufgebracht wird. Hierdurch wird erreicht, dass die Bremskraft stufenlos, insbesondere kontinuierlich, geregelt werden kann. Hierdurch wird der Bedienkomfort erhöht und ein intuitives Bedienen ermöglicht.

Das Betätigungselement umfasst insbesondere einen um eine Schwenkachse relativ zu einem Gehäuse der Schwenkeinheit verschwenkbaren Hebel. Dieser ist insbesondere durch das elastische Element der Bremseinheit und/oder weitere elastische Elemente in einer Grundposition vorgespannt, wobei diese Grundposition diejenige Position ist, in der das Betätigungselement nicht betätigt ist und die das Betätigungselement somit einnimmt, wenn das Bremselement bzw. die Bremselemente in der Bremsposition angeordnet ist bzw. sind.

Es ist besonders vorteilhaft, wenn der Hebel zum Lösen aus dieser Grundposition in Richtung der Bedienperson hingezogen wird, so dass ein besonders einfaches und komfortables Bedienen ermöglicht wird.

Bei einer besonders bevorzugten Ausführungsform umfasst die Bremseinheit mindestens 2, vorzugsweise vier, als Radialkolben ausgebildete Bremselemente, wobei jeweils zwei dieser Radialkolben bezogen auf eine Mittelebene der Welle gegenüberliegend angeordnet sind, wobei diese gegenüberliegend angeordneten Radialkolben über jeweils ein elastisches Element in entgegengesetzte Richtungen, also aufeinander zu, vorgespannt sind. Demnach ist eine gerade Anzahl an Radialkolben, wie beispielsweise zwei, vier, sechs oder acht Radialkolben, bevorzugt, wobei zwei entsprechend der zuvor beschriebenen Radialkolben jeweils gegenüberliegend angeordnet sind.

Hierdurch wird ein besonders einfacher und kompakter Aufbau erreicht. Darüber hinaus wird ein gleichmäßiger Krafteintrag erzeugt. Insbesondere sind die Radialkolben derart angeordnet und/oder ausgebildet, dass ihre Krafteinleitstellen symmetrisch über den Umfang der Welle verteilt sind.

Ferner ist es vorteilhaft, wenn zwischen den beiden aufeinander zu vorgespannten Radialkolben jeweils ein fest mit dem Betätigungselement verbundenes Zwischenelement angeordnet ist und wenn die beiden Radialkolben aufgrund ihrer Vorspannung über ein jeweiliges elastisches Element gegen gegenüberliegende Seiten dieses Zwischenelementes drücken. Bei einer Betätigung des Betätigungselementes wird das Zwischenelement derart gekippt, dass der Abstand zwischen den Radialkolben in Abhängigkeit des Betätigungsweges des Betätigungselementes, also in Abhängigkeit davon, wie weit das Betätigungselement aus seiner Grundposition herausbewegt ist, vergrößert wird, so dass die Radialkolben von der Bremsposition in Richtung der gelösten Position bewegt werden. Insbesondere wird durch das Verkippen des Zwischenelementes dieses schräg gestellt, so dass es die Radialkolben mit seinen Kanten kontaktiert und auseinander drückt. Somit wird ein sehr sicherer, einfach ausgebildeter, kompakter Aufbau erreicht. Darüber hinaus ermöglicht dieser Aufbau, dass das Betätigungselement durch dieses Einklemmen des fest mit dem Betätigungselement verbundenen Zwischenelementes zwischen den beiden vorgespannten Radialkolben automatisch über die Radialkolben in seiner Grundposition vorgespannt ist und hierfür keine separaten elastischen Elemente vorgesehen sein müssen.

Das Kippen des Zwischenelementes erfolgt insbesondere um die gleiche Schwenkachse wie das Verschwenken des Hebels bei dessen Betätigung. Insbesondere sind die Zwischenelemente und die Lager, über die der Hebel drehbar zum Gehäuse an diesem gelagert ist, einstückig ausgebildet, so dass ein besonders einfacher Aufbau und eine sichere Betätigung erreicht werden.

Wenn die Radialkolben in der Bremsposition angeordnet sind, so kontaktieren ihre Stirnflächen das Zwischenelement, welches in einem vorbestimmten Winkel relativ zur Horizontalen angeordnet ist. Beim Verkippen des Zwischenelementes werden dessen Oberflächen entsprechend ebenfalls verkippt, so dass der Winkel zur Horizontalen vergrößert wird und hierüber der Abstand zwischen den aufeinander zugespannten Radialkolben vergrößert wird. Durch die Vergrößerung des Abstandes wiederum wird die Kraft, über die die Radialkolben an die Welle angedrückt werden, verringert, so dass die Bremskraft entsprechend reduziert wird.

Bei einer besonders bevorzugten Ausführungsform ist das Betätigungselement über das elastische Element, über das das Bremselement der Bremsposition vorgespannt ist, in einer Grundposition vorgespannt, in der das Betätigungselement angeordnet ist, wenn das Bremselement in der Bremsposition angeordnet ist. Alternativ oder zusätzlich kann das Betätigungselement auch über weitere, separate, elastische Elemente, beispielsweise Federn, in der Grundposition vorgespannt sein.

Bei einer besonders bevorzugten Ausführungsform ist ein weiteres elastisches Element vorgesehen, dessen Rückstellkraft beim Verschwenken der Schwenkeinheit aus einer vorbestimmten Nullposition der Gewichtskraft der Schwenkeinheit entgegenwirkt.

Unter dem Entgegenwirken gegen die Gewichtskraft wird insbesondere verstanden, dass das durch die Rückstellkraft der Schwenkeinheit bezogen auf die Drehachse der Schwenkeinheit, also die Längsachse der Welle, erzeugte Drehmoment, das sogenannte Rückstellmoment, dem durch die Gewichtskraft der Schwenkeinheit um die Längsachse der Welle, also die Drehachse der Schwenkeinheit, erzeugten Drehmoment, dem sogenannten Tangentialmoment, entgegenwirkt, insbesondere entgegengerichtet ist.

Hierdurch wird erreicht, dass im festgestellten Zustand, also bei in der Bremsposition angeordneter Bremseinheit, nicht das gesamte Drehmoment der Schwenkeinheit durch die Bremseinheit aufgenommen werden muss, sondern zumindest ein Teil des Drehmomentes auch durch das elastische Element aufgenommen wird. Ferner muss somit eine Bedienperson, wenn das Bremssystem gelöst ist, zum Verschwenken der Schwenkeinheit eine geringere Kraft aufwenden, als wenn das elastische Element nicht vorgesehen wäre, so dass ein einfacheres Bedienen möglich ist. Insbesondere wird hierdurch vermieden, dass sich die Schwenkeinheit ungewollt unkontrolliert bewegt und es somit zu Sach- oder Personenschäden kommt. Da das Bremssystem somit eine geringere Bremskraft aufwenden muss, kann es somit kleiner dimensioniert werden, so dass ein kompakter kostengünstiger Aufbau erreicht wird.

Bei einer bevorzugten Ausführungsform ist das elastische Element an dem Stativgrundkörper befestigt, so dass dieses nicht zusammen mit der Schwenkeinheit verschwenkt werden muss. Hierdurch wird ein besonders einfacher Aufbau erreicht. Bei einer alternativen Ausführungsform der Erfindung kann das elastische Element auch Teil der Schwenkeinheit sein, und somit mit dieser mitverschwenkt werden.

Bei einer besonders bevorzugten Ausführungsform ist das elastische Element in Form einer Torsionsfeder ausgebildet. Hierdurch wird ein besonders einfacher, kostengünstiger und stabiler Aufbau erreicht.

Die Torsionsfeder ist insbesondere derart angeordnet, dass die Längsachse der Torsionsfeder mit der Längsachse der Welle zusammenfällt. Unter der Längsachse der Torsionsfeder wird insbesondere die Längsachse des Zylinders verstanden, der sich durch die Wicklung der Torsionsfeder ergibt. Hierdurch wird erreicht, dass die Torsionsfeder immer um den Winkel gespannt wird, um den die Schwenkeinheit verschwenkt ist. Insbesondere wird somit erreicht, dass bei einem Verschwenken der Schwenkeinheit aus der Nullposition in beide Richtungen die Torsionsfeder jeweils entsprechend gleich gespannt ist und somit die gleiche Rückstellkraft und damit das gleiche Gegenmoment ausgeübt wird. Das Gegenmoment ist insbesondere dasjenige Moment, das durch die Rückstellkraft der Torsionsfeder um die Drehachse der Schwenkeinheit, also die Längsachse der Welle, erzeugt wird.

Unter Längsachsen wird im Rahmen dieser Anmeldung insbesondere der jeweils mathematische Begriff einer Achse, also als eine unendliche Gerade verstanden. Die Längsachse ist somit insbesondere nicht auf die Länge des Bauteils beschränkt.

Bei einer besonders bevorzugten Ausführungsform umfasst der Stativgrundkörper eine Kulisse und die Schwenkeinheit einen Stab, der fest mit der Schwenkeinheit verbunden ist und in die Kulisse hineinragt. Hierdurch wird zum einen eine Führung der Schwenkeinheit bei deren Verschwenken zum Stativgrundkörper und zum anderen eine Begrenzung der maximal möglichen Verschwenkung der Schwenkeinheit aus der Nullposition erreicht. Die Kulisse ist insbesondere derart ausgebildet, dass die Schwenkeinheit aus der Nullposition innerhalb eines symmetrischen Schwenkbereiches in zwei entgegengesetzte Richtungen verschwenkt werden kann. Insbesondere kann die Schwenkeinheit jeweils um 60° in beide Richtungen aus der Nullposition heraus verschwenkt werden, so dass sich insbesondere ein Schwenkbereich von 120° ergibt. Diese Begrenzung hat den Vorteil, dass die sich bei einer Verkippung um 60° in beide Richtungen maximal ergebende Tangentialkraft der Gewichtskraft, also diejenige Kraft, die das Drehmoment bewirkt, annähernd linear zu dem Winkel, um den die Schwenkeinheit verschwenkt ist, ist, so dass durch eine Feder mit einer linearen Kennlinie ein annähernd gleichmäßiger Anteil als Gegenmoment aufgebracht werden kann.

Die Kulisse ist vorzugsweise kreissegmentförmig ausgebildet, wobei der Mittelpunkt des Kreises auf der Drehachse der Schwenkeinheit, also der Längsachse der Welle, liegt.

Ferner ist es vorteilhaft, wenn die Torsionsfeder drehbar auf einem Wellenstumpf oder einer Welle angeordnet ist und wenn die Enden des Drahtes der Torsionsfeder derart zur eigentlichen Wicklung der Torsionsfeder abgewinkelt sind, dass zwischen ihnen ein Zwischenraum ausgebildet ist. In diesem Zwischenraum ist zum einen der in der Kulisse geführte Stab zumindest teilweise angeordnet und zum anderen ein Vorsprung des Stativgehäuses.

Hierdurch wird erreicht, dass bei einem Verschwenken der Schwenkeinheit aus der Nullposition in eine erste Richtung sich das erste Ende des Drahtes der Torsionsfeder an dem Vorsprung abstützt und das zweite Ende des Drahtes der Torsionsfeder von dem Stab mitgenommen wird, so dass die Torsionsfeder entsprechend mit zunehmenden Schwenken der Schwenkeinheit aus der Nullposition weiter gespannt wird und eine größere Rückstellkraft aufgebracht wird. Umgekehrt wird bei einem Verschwenken der Schwenkeinheit aus der Nullposition in eine der ersten Richtung entgegengesetzte zweite Richtung das erste Ende des Drahtes der Torsionsfeder von dem Stab mitgenommen, wohingegen sich das zweite Ende des Drahtes der Torsionsfeder an dem Vorsprung abstützt. Entsprechend wird auch hierbei die Feder wieder zunehmend gespannt, so dass sich eine zunehmende Rückstellkraft in Abhängigkeit des Auslenkungswinkels der Schwenkeinheit ergibt. Insbesondere wird über diesen Aufbau auch erreicht, dass bei einer gleichen Auslenkung in die erste und die zweite Richtung jeweils die gleiche Rückstellkraft wirkt. Ferner ermöglicht der zuvor beschriebene Aufbau eine einfache Montage, da die Feder einfach aufgesteckt werden muss und nicht aufwendig befestigt werden muss.

Ferner ist es vorteilhaft, wenn die Längsachse des Wellenstumpfes mit der Längsachse der Welle, auf der die Schwenkeinheit gelagert ist, zusammenfällt, so dass ein besonders einfacher Aufbau gegeben ist und die zuvor beschriebenen Kraftzusammenhänge sichergestellt sind.

In der Nullposition kontaktiert der Stab insbesondere keines der beiden Enden der Torsionsfeder, so dass diese in dem Nullzustand nicht gespannt ist und somit keine Rückstellkraft ausübt. In der Nullposition ist dies auch nicht notwendig, da ohnehin kein Drehmoment von der Schwenkeinheit ausgeht.

Es ist besonders vorteilhaft, wenn generell das elastische Element ungespannt ist, wenn die Schwenkeinheit in der Nullposition angeordnet ist. Hierdurch wird insbesondere Ermüdungen des elastischen Elementes vorgebeugt.

Es ist besonders vorteilhaft, wenn das elastische Element derart ausgebildet oder angeordnet ist, dass dessen Rückstellmoment, das durch die Rückstellkraft bewirkt wird, dem Tangentialmoment entgegenwirkt, das durch die Tangentialkraft bewirkt wird, die sich beim Aufteilen der im Schwerpunkt der Schwenkeinheit angreifenden Gewichtskraft der Schwenkeinheit in eine in Richtung der Längsachse der Welle gerichtete Radialkraft und eben jene Tangentialkraft ergibt. Das Tangentialmoment ergibt sich insbesondere durch Multiplikation des Tangentialkraft mit dem Normalabstand der Tangentialkraft zur Drehachse. Das Rückstellmoment ist für jede Ausrichtung der Schwenkeinheit vorzugsweise in etwa gleich groß oder größer als das Tangentialmoment.

Gemäß einem vereinfachten Modell kann man sich die Schwerkraft der Schwenkeinheit als eine im Schwerpunkt der Schwenkeinheit angreifende Kraft vorstellen. Diese Gewichtskraft lässt sich bei jeder Stellung der Schwenkeinheit in eine Tangentialkraft und eine radiale Kraft aufteilen, die von dem Schwerpunkt zur Drehachse der Schwenkeinheit gerichtet ist und die somit kein Drehmoment um die Drehachse der Schwenkachse erzeugt. Bei dieser Aufteilung ergibt sich eine weitere Kraft, die Tangentialkraft, die entsprechend orthogonal zu der zur Drehachse gerichteten Radialkraft ist und die somit auch orthogonal zu einer Verbindungslinie zwischen dem Schwerpunkt und der Drehachse der Schwenkeinheit ist. Diese Tangentialkraft ist für die Erzeugung des Tangentialmoments verantwortlich. Die Rückstellkraft bewirkt das Rückstellmoment, welches entgegen dem Tangentialmoment gerichtet ist, also einen umgekehrten Drehsinn hat.

Das Rückstellmoment ist zumindest in einem Teilbereich des Schwenkbereiches, vorzugsweise über den gesamten Schwenkbereich größer oder gleich dem Tangentialmoment. Somit ist eine besonders einfache Schwenkbewegung der Schwenkeinheit möglich, bei welcher der Nutzer ohne großen Kraftaufwand die Schwenkeinheit stets sicher und genau kontrollieren kann.

Ferner ist das elastische Element insbesondere derart gewählt, dass in zumindest einem Teilbereich des Schwenkbereichs, vorzugsweise über den gesamten Schwenkbereich, das Rückstellmoment dem 0,8-fachen bis 1,2-fachen des Tangentialmomentes entspricht.

Hierdurch wird erreicht, dass das resultierende Moment zumindest in einem Teilbereich, vorzugsweise immer, maximal +/-20% des Tangentialmoments beträgt, und somit die von der Bedienperson bzw. der Bremseinheit aufzubringende Kraft gering ist und ein Wegschnellen der Schwenkeinheit beim Lösen der Bremseinheit in beiden Richtungen vermieden wird.

Das Rückstellmoment ergibt sich insbesondere als Produkt der Rückstellkraft des elastischen Elements und des Abstandes der Rückstellkraft zur Drehachse. Entsprechend ergibt sich das Tangentialmoment insbesondere als Produkt der Tangentialkraft und des Abstandes der Tangentialkraft zur Drehachse.

Das Rückstellmoment ($M_R$) und das Tangentialmoment ($M_T$) erfüllen insbesondere in zumindest einem Teilbereich des Schwenkbereichs die Gleichung:

$$M_R >= M_T$$

Es ist besonders vorteilhaft, wenn diese Gleichung für jedes Verschwenken der Schwenkeinheit aus dem Nullposition um mindestens 83%, vorzugsweise mindestens 67%, insbesondere mindestens 50%, des maximalen Schwenkwinkels erfüllt ist. Somit ist die Gleichung insbesondere jeweils an den Enden des Schwenkbereiches, also bei einem Verschwenken zwischen 83% und 100% bzw. zwischen 67% und 100% bzw. zwischen 50% und 100% des maximalen Schwenkwinkels, erfüllt. Hierdurch wird ein starkes Anschlagen an die Anschläge zur Begrenzung des Schwenkbereichs vermieden.

Bei einer besonders bevorzugten Ausführungsform ist diese Gleichung für den gesamten Schwenkbereich erfüllt.

Es ist besonders vorteilhaft, wenn diese Gleichung für jedes Verschwenken der Schwenkeinheit aus dem Nullposition um mindestens 50°, vorzugsweise mindestens 40°, insbesondere mindestens 30°, erfüllt ist. Bei einer besonders bevorzugten Ausführungsform ist diese Gleichung für den gesamten Schwenkbereich erfüllt.

Bei einem maximalen Schwenkwinkel von 60 ° ist die oben genannte Gleichung somit insbesondere bei einem Verschwenken zwischen 50° und 60° oder zwischen 40° und 60° oder zwischen 30° und 60° aus der Nullposition heraus erfüllt.

Dies kann bei einer Auslenkung von maximal 60° in jede Richtung von der Nullposition aus gesehen, insbesondere durch ein elastisches Element mit einer linearen Kennlinie erreicht werden, da das Tangentialmoment zwar proportional zum Sinus des Schwenkwinkels ist, dieser aber in einem Bereich von 60° um den Nullpunkt in etwa linear verläuft.

Bei einer besonders bevorzugten Ausführungsform ist die Welle hohl ausgebildet. Dies hat den Vorteil, dass diese als Kabelkanal dienen kann, durch den die Verkabelung zwischen dem Stativgrundkörper und den in der Schwenkeinheit angeordneten Baueinheiten erfolgen kann. Dies hat den Vorteil, dass auch bei einem Verschwenken der Schwenkeinheit die Verkabelung nicht gelöst werden kann und nicht im Weg ist.

Ferner ist es vorteilhaft, wenn die Schwenkeinheit ein Zoomsystem und/oder ein Objektivsystem mit mehreren wahlweise in den Strahlengang verbringbaren Objektiven umfasst. Je nach Objektiv kann eine unterschiedliche Vergrößerung des Objektes erzielt werden.

Die Objektive sind insbesondere als parfokale Objektive ausgebildet, was den Vorteil hat, dass ein Austausch verschiedener Objektive möglich ist, ohne dass eine Fokusverschiebung erfolgt, so dass kein Nachjustieren durch die Bedienperson notwendig ist.

Darüber hinaus ist es besonders vorteilhaft, wenn die Objektive werksseitig auf den vorbestimmten Abstand zwischen der Längsachse der Welle, also der Drehachse der Schwenkeinheit, und der Position, in der das jeweils gewählte Objektiv bei seiner Benutzung angeordnet ist, also der Betriebsposition, abgestimmt ist. Durch dieses Abstimmen der Objektive auf die Drehachse des Schwenksystems wird ein euzentrisches Verschwenken der Schwenkeinheit realisiert, so dass die Bedienperson beim Verschwenken der Schwenkeinheit keine neuen Justiervorgänge durchführen muss.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:

Fig. 1   eine schematische, perspektivische Darstellung eines Mikroskops;

Fig. 2   eine schematische, perspektivische Darstellung eines Ausschnitts des Mikroskops mit Blick auf eine Bremseinheit;

Fig. 3   eine Schnittdarstellung eines Ausschnitts des Mikroskops nach den Figuren 1 und 2 mit Blick auf die in einer Bremsposition angeordnete Bremseinheit;

Fig. 4   eine weitere Schnittdarstellung eines Ausschnitts des Mikroskops nach den Figuren 1 und 2 mit seitlichem Blick auf die in der Bremsposition angeordnete Bremseinheit;

Fig. 5   eine Schnittdarstellung eines Ausschnitts des Mikroskops nach den Figuren 1 und 2 mit in einer gelösten Position angeordneter Bremseinheit;

Fig. 6   eine Schnittdarstellung eines Ausschnitts des Mikroskops nach den Figuren 1 und 2 mit seitlichem Blick auf die in der gelösten Position angeordnete Bremseinheit;

Fig. 7   eine weitere schematische, perspektivische Darstellung eines Ausschnitts des Mikroskops nach den Figuren 1 und 2 mit Blick auf einen Klickstoppmechanismus;

Fig. 8   eine Schnittdarstellung eines Ausschnitts des Mikroskops nach den Figuren 1 und 2 mit einem in einer Ausgangsposition angeordnetem Rastelement des Klickstoppmechanismus;

Fig. 9   eine Schnittdarstellung eines Ausschnitts des Mikroskops nach den Figuren 1 und 2 bei in einem ersten Betätigungsbereich betätigten Betätigungselement;

Fig. 10   eine Schnittdarstellung eines Ausschnitts des Mikroskops nach den Figuren 1 und 2 mit innerhalb eines zweiten Betätigungsbereiches betätigten Betätigungselement;

Fig. 11   eine schematische, perspektivische Darstellung des Mikroskops nach den Figuren 1 und 2 mit Blick auf eine Hinterseite des Mikroskops bei ausgeblendeten Gehäuseteilen;

Fig. 12   eine Schnittdarstellung des Mikroskops nach den Figuren 1 und 2 bei in einer Nullposition angeordneter Schwenkeinheit;

Fig. 13   eine weitere Schnittdarstellung des Mikroskops nach den Figuren 1 und 2 bei aus der Nullposition in eine erste Position bewegter Schwenkeinheit;

Fig. 14   eine weitere Schnittdarstellung des Mikroskops nach den Figuren 1 und 2 mit aus der Nullposition in eine zweite Position verschwenkter Schwenkeinheit;

Fig. 15   ein Diagramm der wirkenden Kräfte in Abhängigkeit des Schwenkwinkels der Schwenkeinheit gemäß einer ersten Ausführungsform;

Fig. 16   ein Diagramm der wirkenden Kräfte in Abhängigkeit des Schwenkwinkels der Schwenkeinheit gemäß einer zweiten Ausführungsform;

Fig. 17   ein Diagramm der wirkenden Kräfte in Abhängigkeit des Schwenkwinkels der Schwenkeinheit gemäß einer dritten Ausführungsform; und

Fig. 18   ein Diagramm der wirkenden Kräfte in Abhängigkeit des Schwenkwinkels der Schwenkeinheit gemäß einer vierten Ausführungsform.

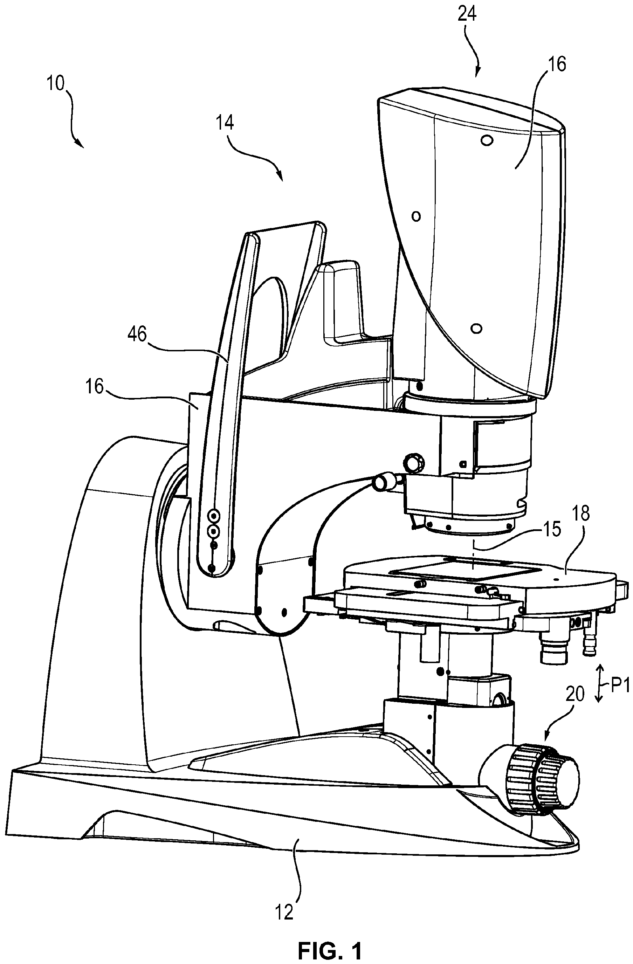

In Figur 1 ist eine schematische, perspektivische Darstellung eines digitalen Mikroskops 10 dargestellt. Das Mikroskop 10 umfasst einen stationären Stativgrundkörper 12, mit Hilfe dessen das Mikroskop 10 auf einer Oberfläche aufgestellt werden kann.

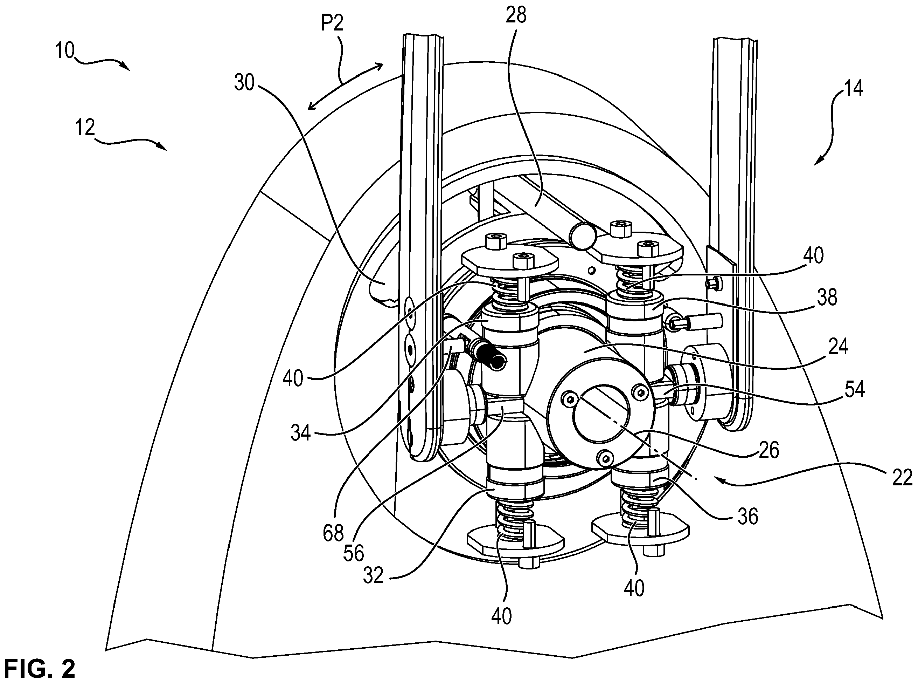

Ferner hat das Mikroskop 10 eine relativ zu diesem Stativgrundkörper 12 verschwenkbare Schwenkeinheit 14. Die schwenkbare Befestigung wird im Folgenden noch im Zusammenhang mit Figur 2 näher beschrieben.

Die Schwenkeinheit 14 umfasst mindestens eine Bilderfassungseinheit, mit deren Hilfe ein Bild der zu mikroskopierenden Objekte aufgenommen werden kann. Insbesondere können über diese Bilderfassungseinheit nicht nur einzelne Bilder, sondern auch Videos aufgenommen werden, die es ermöglichen, das zu mikroskopierende Objekt aus verschiedenen Blickwinkeln zu betrachten.

Ferner weist die Schwenkeinheit 14 ein Objektivsystem und/oder ein Zoomsystem auf, mit dessen Hilfe unterschiedliche Vergrößerungen der zu mikroskopierenden Objekte eingestellt werden können. Das Objektivsystem hat insbesondere eine Vielzahl von Objektiven, von denen jeweils eins wahlweise in den Strahlengang des Mikroskops 10 eingeschwenkt werden kann, so dass dieses eingeschwenkte Objektiv aktuell verwendet wird. Der Strahlengang bzw. die optische Achse des Mikroskops 10 ist in Figur 1 mit dem Bezugszeichen 15 bezeichnet.

Die Bilderfassungseinheit, bei der es sich insbesondere um mindestens eine Kamera handelt, und das Objektivsystem sind in Figur 1 nicht sichtbar, da diese von einem Gehäuse 16 der Schwenkeinheit 14 verdeckt sind.

Die Objektive des Objektivsystems sind insbesondere parfokal ausgebildet, so dass bei einem Objektivwechsel keine Refokussierung durch die Bedienperson erfolgen muss. Die Objektive sind hierbei insbesondere auf den Abstand zwischen der Drehachse, um die die Schwenkeinheit 14 gedreht wird, und dem Interface der Objektive, also den Bereich, in dem die Objektive angeordnet werden, abgestimmt, so dass sich ein euzentrisches System ergibt, was zur Folge hat, dass bei einem Verschwenken der Schwenkeinheit 14 relativ zum Stativgrundkörper 12 keine neue Fokussierung erfolgen muss.

An dem Stativgrundkörper 12 ist ferner ein Objekttisch 18 befestigt, auf dem die zu mikroskopierenden Objekte aufgebracht werden. Dieser Mikroskoptisch 18 kann mit Hilfe von Stellrädern 20 relativ zum Stativgrundkörper 12 in Richtung des Doppelpfeiles P1 verstellt werden, wodurch eine Fokussierung der zu mikroskopierenden Objekte möglich ist.

In Figur 2 ist eine schematische, perspektivische Darstellung eines Ausschnitts des Mikroskops 12 mit Blick auf eine Bremseinheit 22 und die Lagerung der Schwenkeinheit 14 relativ zum Stativgrundkörper 12 dargestellt. Hierzu ist das Gehäuse 16 der Schwenkeinheit 14 ausgeblendet. Ferner ist auch der obere Teil der Schwenkeinheit 14 nicht dargestellt, um diese innen liegenden Bauteile besser sichtbar zu machen.

Der Stativgrundkörper 12 umfasst eine Welle 24, auf der die Schwenkeinheit 14 um die Längsachse 26 der Welle 24 drehbar gelagert ist. Die Längsachse 26 der Welle 24 bildet somit die Drehachse der Schwenkeinheit 14.

Die Schwenkeinheit 14 umfasst einen Stab 28, der fest an der Schwenkeinheit 14 befestigt ist und innerhalb einer Kulisse 30 des Stativgrundkörpers 12 geführt ist. Die Kulisse 30 ist insbesondere kreissegmentförmig ausgebildet, wobei der Mittelpunkt dieses Kreises auf der Längsachse 26 liegt. Über die Kulisse 30 und den eingreifenden Stab 28 erfolgt zum einen eine Führung der Bewegung und zum anderen insbesondere eine Begrenzung der maximal möglichen Verschwenkung.

Die Kulisse 30 ist insbesondere derart ausgebildet, dass sie einen Winkel von 120° abdeckt, was zur Folge hat, dass die Schwenkeinheit aus einer in den Figuren 1 und 2 gezeigten Nullposition in beide Richtungen des Doppelpfeiles P2 um 60° verschwenkbar ist. Die Nullposition ist diejenige Position, bei der die Schwenkeinheit gerade ausgerichtet ist, d.h., dass sie mittig über dem Mikroskoptisch 18 angeordnet ist und die seitlichen Gehäuseteile des Gehäuses 16 vertikal ausgerichtet sind. Anders ausgedrückt ist die Nullposition diejenige Position, in der die optische Achse 15 des Mikroskops 10 senkrecht zur Oberfläche des Mikroskoptischs 18 verläuft.

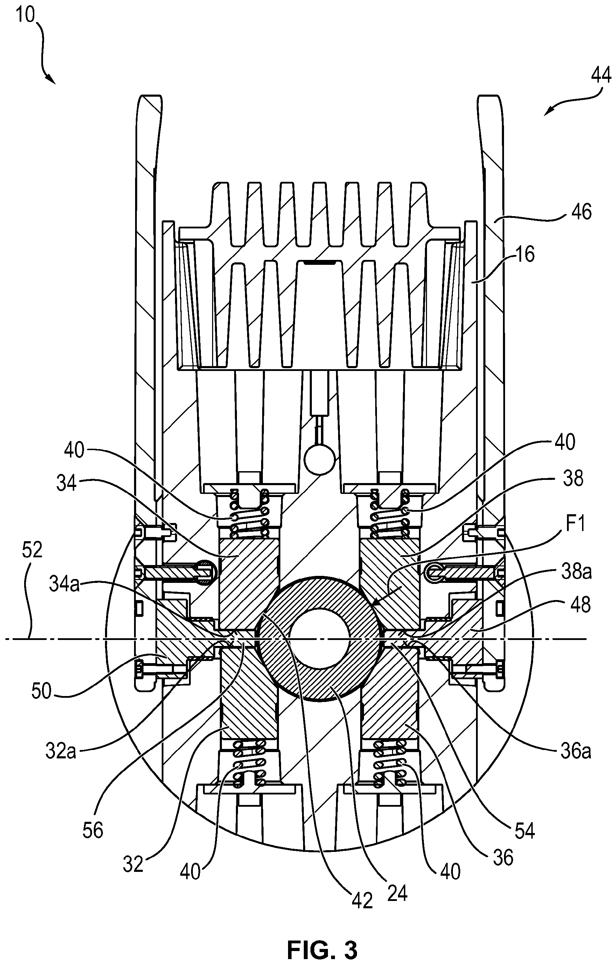

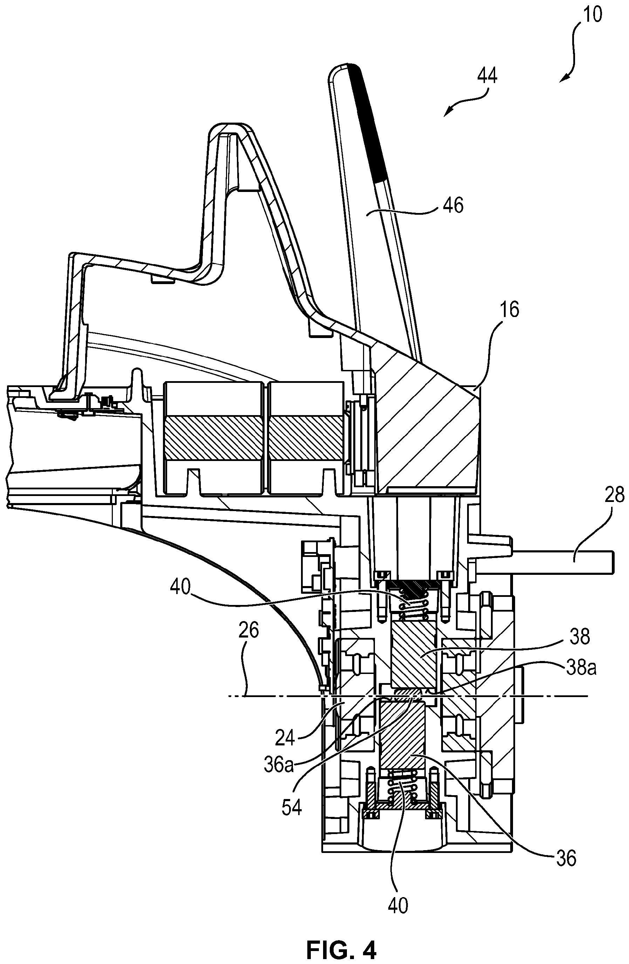

Um die Schwenkeinheit 14 in einer gewollten Position festzustellen und um deren Bewegung zu bremsen, ist die Bremseinheit 22 vorgesehen, die insgesamt vier Radialkolben 32 bis 38 aufweist, die über jeweils eine Feder 40, derart vorgespannt sind, dass sie gegen die Oberfläche der Welle 24 drücken, so dass eine Reibverbindung ausgebildet wird, wobei die hierdurch entstehende Kraft als Bremskraft bzw. Feststellkraft dient. In den Figuren 3 und 4 sind jeweils Schnittdarstellungen des Ausschnitts der Schwenkeinheit 14 und der Welle 24 dargestellt, wobei Figur 3 eine Draufsicht und Figur 4 eine Seitenansicht zeigt. Bei beiden Figuren ist hierbei eine Bremsposition dargestellt, bei der die Radialkolben 32 bis 38 die Oberfläche der Welle 24 kontaktieren und somit die Schwenkeinheit 14 festgestellt ist.

Die Radialkolben 32 bis 38 weisen jeweils eine abgeschrägte Kontaktfläche 42 auf, wobei diese insbesondere mit der Stirnseite 32a bis 38a des jeweiligen Radialkolbens einen Winkel zwischen 45° und 70°, vorzugsweise einen Winkel von etwa 60°, einschließt. Über diese abgeschrägten Flächen wird erreicht, dass die Radialkolben die Welle 24 entlang einer möglichst großen Kontaktlinie kontaktieren und eine Kraft F1 auf die Welle ausüben, durch die die notwendige Reibung aufgebracht wird und somit ein Feststellen der Bremseinheit 22 erfolgt.

Bei einer alternativen Ausführungsform können auch mehr oder weniger als vier Radialkolben 32 bis 38, beispielsweise zwei Radialkolben oder sechs Radialkolben, vorgesehen sein. Darüber hinaus kann die Kontaktfläche 42 auch eine andere Form haben. Beispielsweise kann die Form der Kontaktfläche an die in der Welle 24 angepasste sein, so dass die Kraftübertragung nicht nur entlang einer Linie, sondern flächig erfolgt.

Darüber hinaus können auch andere Bremselemente als Radialkolben 32 bis 38, beispielsweise Bremsklötze, verwendet werden.

Ferner können anstelle von Federn 40 auch andere elastische Elemente, beispielsweise Gummi oder Silikonblöcke, benutzt werden.

Die Bremseinheit 22 kann mit Hilfe eines Betätigungselementes 44 gelöst werden. Dieses Betätigungselement 44 umfasst einen Hebel 46, dessen der Bremseinheit 22 abgewandtes Ende von einer Bedienperson manuell betätigt werden kann. Bei einer, beispielsweise in Figur 1 und 2 gezeigten Grundposition ist dieses Betätigungselement 44 nicht betätigt. Um die Bremseinheit 22 zu lösen, muss der Hebel 46 von der Bedienperson aus dieser Grundposition bewegt werden. Bei dem in den Figuren 1 und 2 gezeigten Ausführungsbeispiel muss der Hebel 46 von der Bedienperson zu sich hingezogen werden, so dass eine einfache Bedienung möglich ist.

Ferner umfasst das Betätigungselement 44 zwei Zwischenelemente 48, 50, über die der Hebel 46 relativ zum Gehäuse 16 um eine Schwenkachse 52 schwenkbar gelagert ist. Ferner weisen diese Zwischenelemente 48, 50 Absätze 54, 56 auf, die jeweils zwischen zwei einander gegenüberliegend angeordneten Radialkolben 32 bis 38 angeordnet sind. In der Bremsposition sind die Oberflächen dieser Absätze 54, 56 und die Stirnseiten der Radialkolben 32 bis 38 in etwa parallel zueinander ausgerichtet.

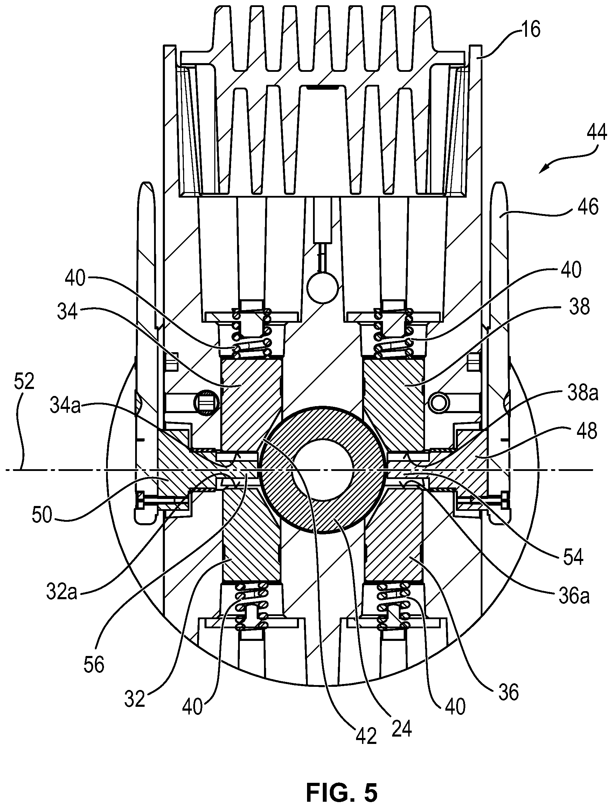

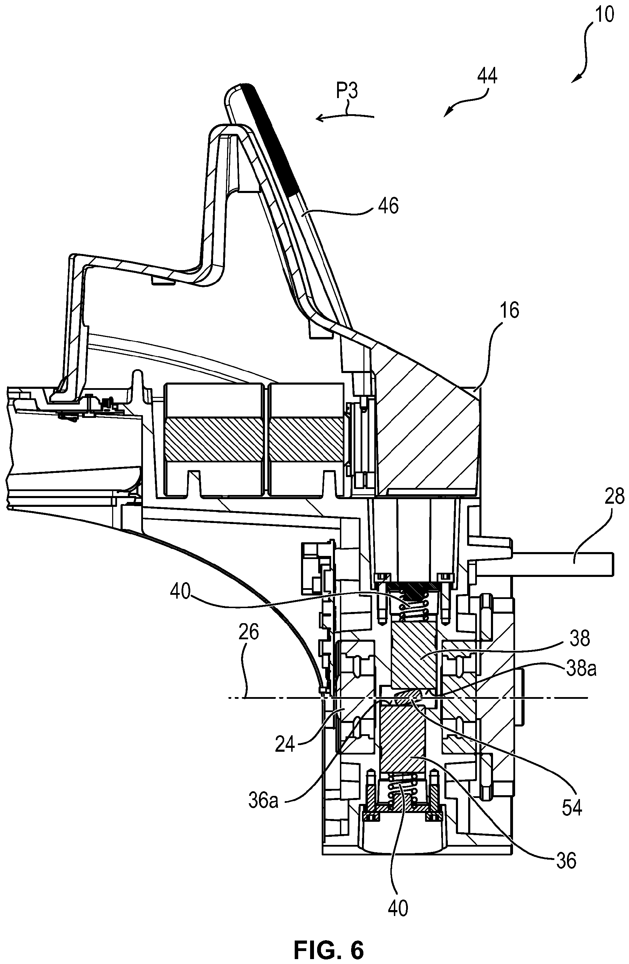

Wird der Hebel 46 von der Bedienposition zu sich hin, d.h. in Richtung des Pfeiles P3 (Figur 6), betätigt, so werden die Zwischenelemente 48, 50 zusammen mit dem Hebel 46 verschwenkt, was zur Folge hat, dass die Absätze 54, 56 verkippt werden, wodurch, wie in den Schnittdarstellungen der Figuren 5 und 6 gezeigt, die Radialkolben 52 bis 58 aus der Bremsposition heraus, voneinander weg, in Richtung einer gelösten Position bewegt werden. Bei der in den Figuren 5 und 6 gezeigten gelösten Position sind die Radialkolben 52 bis 58 hierbei so weit voneinander weg bewegt, dass sie die Welle 24 überhaupt nicht mehr kontaktieren, so dass überhaupt keine Bremskraft mehr gegeben ist. Wird der Hebel 46 dagegen nicht ganz so weit betätigt, wie bei der extremen Situation in den Figuren 5 und 6, so kann es sein, dass die Radialkolben 32 bis 38 die Welle 24 zwar noch kontaktieren, die Kraft jedoch geringer ist als bei der Bremsposition. Somit kann die Schwenkeinheit 14 trotz der Bremskraft bewegt werden, wobei jedoch die Bremskraft somit stufenlos über die Bedienperson, je nachdem wie weit sie an dem Hebel 46 zieht, eingestellt werden kann. Somit ist insbesondere eine Feinpositionierung der Schwenkeinheiten problemlos möglich.

Lässt die Bedienperson den Hebel 46 dagegen los, so werden die Radialkolben 32 bis 38 durch die Federn 40 automatisch wieder in die Bremsposition bewegt, so dass die Bremseinheit 22 automatisch festgestellt wird und ein unbeabsichtigtes unkontrolliertes Verschwenken der Schwenkeinheit 14 vermieden wird.

Darüber hinaus bewirken die Federn 40 der Radialkolben 32 bis 38 über den Kontakt der Radialkolben 32 bis 38 zu den Zwischenelementen 48, 50, dass beim Loslassen des Hebels 46 dieser automatisch wieder in die Grundposition zurückbewegt wird, ohne dass hierfür weitere elastische Elemente notwendig sind. Alternativ können dennoch auch noch weitere elastische Elemente zum Vorspannen des Hebels 46 in der Grundposition vorgesehen sein.

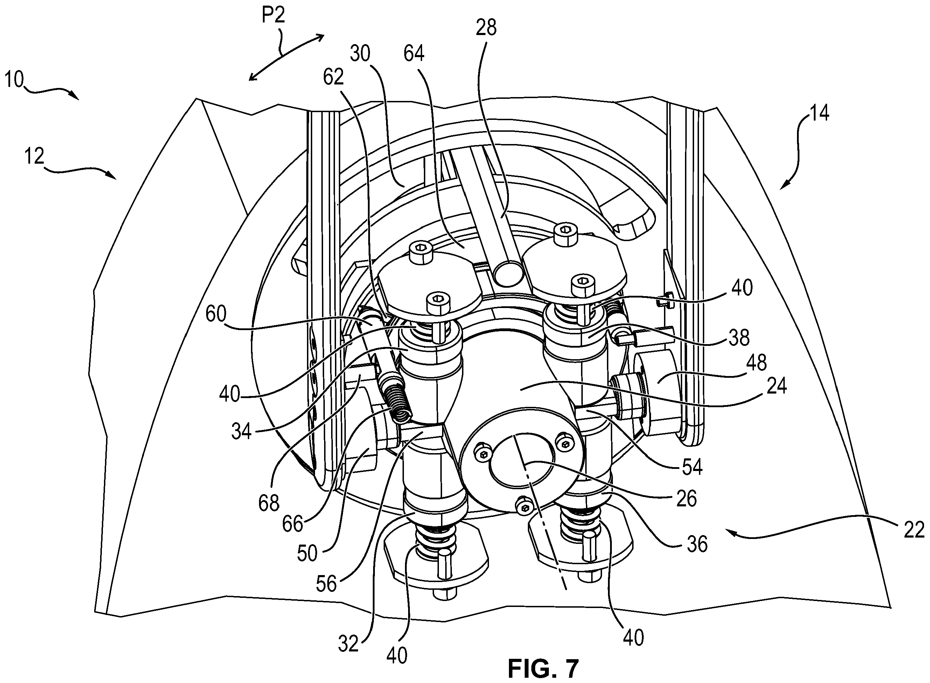

In Figur 7 ist eine weitere schematische, perspektivische Darstellung des Ausschnittes des Mikroskops 10 dargestellt, wobei hierbei der Blick auf eine als "Klickstoppmechanismus" dienende Rastverbindung gerichtet ist. Diese Rastverbindung wird zwischen einem als Stift 60 ausgebildeten ersten Rastelement und einem als Aussparung 62 ausgebildeten zweiten Rastelement hergestellt. Der Stift 60 ist hierbei Teil der Schwenkeinheit 14, wohingegen die Aussparung 62 in einem Ring 64 des Stativgrundkörpers 12 vorgesehen ist.

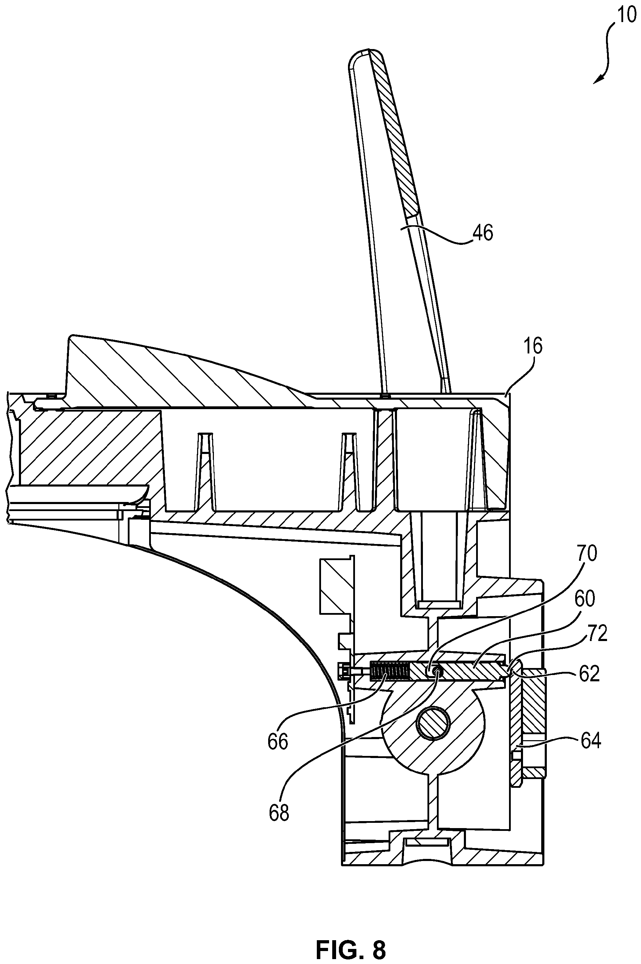

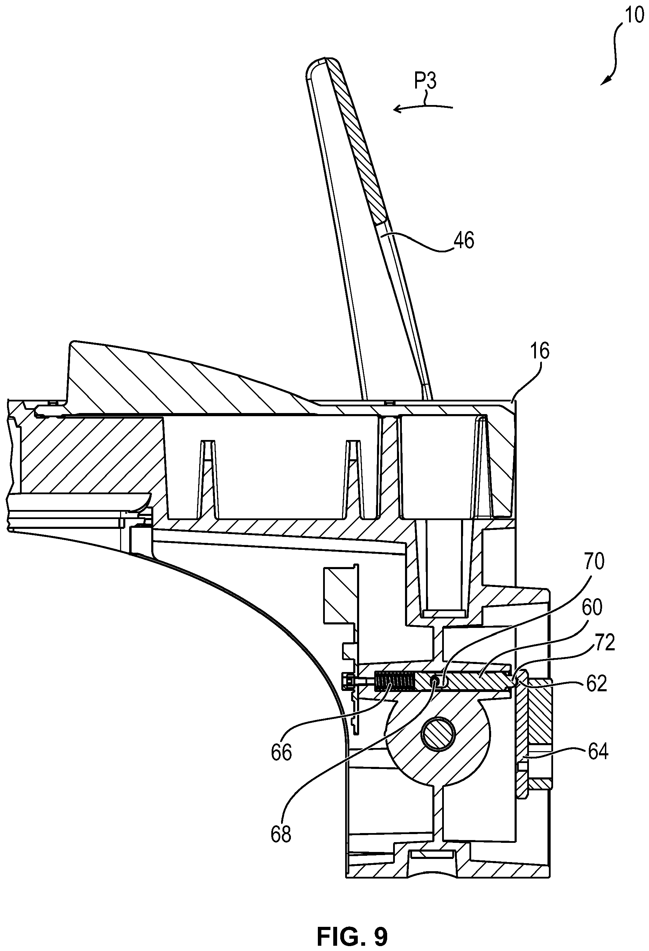

In den Figuren 8 bis 10 ist jeweils eine Schnittdarstellung eines Ausschnitts des Mikroskops 10 mit Blick auf diesen Klickstoppmechanismus dargestellt, wobei der Schnitt so gewählt ist, dass der Stift 60 geschnitten wird. In den Figuren 8 bis 10 sind unterschiedliche Stellungen des Stiftes 60 dargestellt, welche sich in Abhängigkeit der Betätigung des Betätigungselementes 44 ergeben.

In Figur 8 ist hierbei derjenige Zustand dargestellt, bei dem die Bremseinheit 22 in der Bremsposition angeordnet ist und der Hebel 46 somit unbetätigt in seiner Grundposition angeordnet ist. Der Stift 60 ist über ein als Feder 66 ausgebildetes elastisches Element in der Ausgangsposition vorgespannt. Wenn die Schwenkeinheit 14 in ihrer Nullposition angeordnet ist, so greift der in der Ausgangsposition angeordnete Stift 60 in die Aussparung 62 ein, so dass eine Rastverbindung hergestellt ist. Dabei ist bei in der Grundposition angeordnetem Hebel 46 die Bremseinheit 22 in der Bremsposition angeordnet ist, ist ein Verschwenken der Schwenkeinheit 14 generell nicht möglich.

Der Hebel 46 ist über einen Verbindungsstift 68 mit dem Stift 60 verbunden, wobei dieser Verbindungsstift 68 in ein Langloch 70 des Stiftes 60 hineinragt.

Wird der Hebel 46 innerhalb eines vorbestimmten ersten Betätigungsbereiches aus der Grundposition heraus betätigt, so wird der Verbindungsstift 68 nur so weit von dem Stativgrundkörper 12 weg bewegt, dass er innerhalb des Langloches 70 bewegt wird, ohne jedoch den Stift 60 aus seiner Ausgangsposition zu bewegen. Dieser erste Betätigungsbereich entspricht in etwa der Hälfte des maximal möglichen Betätigungsweges des Hebels 46.

Ist der Hebel 46 innerhalb dieses ersten Betätigungselementes betätigt, so ist die Bremseinheit 22 zumindest so weit gelöst, dass ein Verschwenken der Schwenkeinheit 14 möglich ist. Wird die Schwenkeinheit 14 aus der Nullposition hinaus bewegt, so wird der Stift 60 aus seiner Ausgangsposition über den Kontakt zu dem Ring 64 aus der Ausgangsposition bewegt und gleitet auf dem Ring 64 entsprechend. Um dieses Hinausbewegen aus der Aussparung 62 sicherzustellen, weist die Aussparung 62 insbesondere abgeschrägte Kanten auf und der Stift hat insbesondere einen halbkugelförmiges Ende 72, welches in die Aussparung 62 eingreift.

Wird die Schwenkeinheit 14 bei nach wie vor innerhalb des ersten Betätigungsbereiches betätigten Hebel 46 wieder zurück in die Nullposition bewegt, so wird der Stift 60 aufgrund der Rückstellkraft der Feder 66 automatisch beim Erreichen der Nullposition, und somit dem Erreichen der Aussparung 62, wieder in die Ausgangsposition zurückbewegt und rastet somit in die Aussparung 62 ein. Dieses Einrasten kann die Bedienperson haptisch durch entsprechende Vibrationen und/oder akustisch durch ein entsprechendes "Klick" wahrnehmen, so dass die Bedienperson jederzeit die Nullposition wieder exakt ansteuern kann.

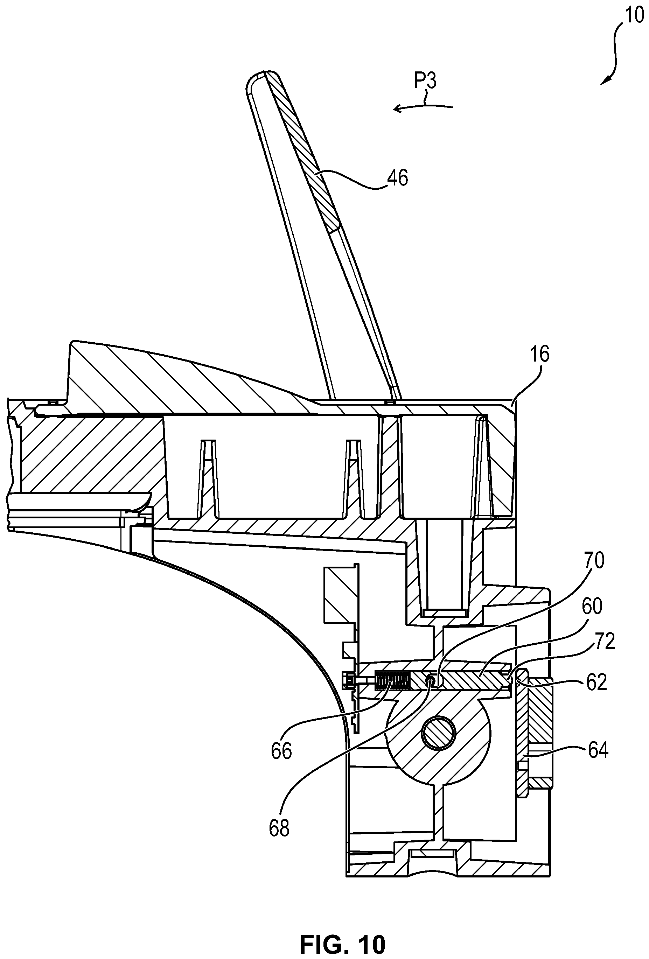

Betätigt die Bedienperson den Hebel 46 jedoch weiter als den ersten Betätigungsbereich, so dass dieser innerhalb eines vorbestimmten zweiten Betätigungsbereiches betätigt ist, wie dies beispielsweise in Figur 10 dargestellt ist, so wird der Stift 60 über den Kontakt zu dem Verbindungsstift 68 entgegen der Rückstellkraft der Feder 66 bereits so weit aus der Ausgangsposition herausbewegt, dass auch dann, wenn die Schwenkeinheit 14 in der Nullposition angeordnet ist, der Stift 60 nicht in die Aussparung 62 einrastet. Dies hat den Vorteil, dass die Schwenkeinheit 14 über die Nullposition hinweg bewegt werden kann, ohne dass ein entsprechendes Einrasten erfolgt. Somit werden beispielsweise Vibrationen vermieden, was bei der Aufnahme von Videos während eines Verschwenkens der Schwenkeinheit 14 vorteilhaft ist.

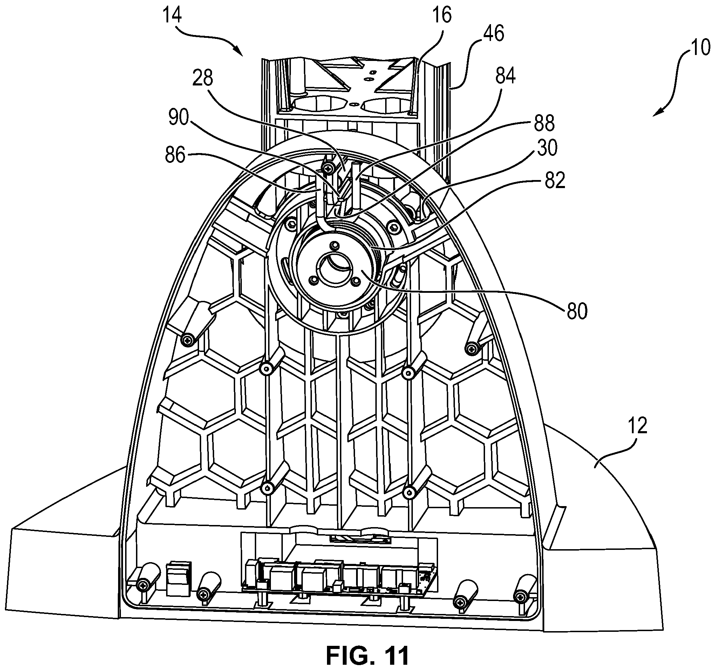

In Figur 11 ist ein weitere schematische, perspektivische Darstellung des Mikroskops 10 mit Blick auf seine Rückseite dargestellt, wobei eine Rückwand des Gehäuses des Stativgrundkörpers 12 ausgeblendet ist, um die innen liegenden Bauteile sichtbar zu machen.

Innerhalb des Gehäuses des Stativgrundkörpers 12 ist ein Wellenstumpf 80 angeordnet, der insbesondere koaxial zur Welle 24 angeordnet ist. Bei einer alternativen Ausführungsform können der Wellenstumpf 80 und die Welle 24 auch einstückig ausgebildet sein.

Auf diesem Wellenstumpf 80 ist eine Torsionsfeder 82 derart gelagert, dass ihre Wicklungen um den Wellenstumpf 80 herumlaufen, so dass auch die Achsen der Torsionsfeder 82 koaxial zum Wellenstumpf 80 und somit zur Welle 24 und somit wiederum zur Drehachse 26 der Schwenkeinheit 14 angeordnet ist.

Die beiden Enden 84, 86 des Drahtes der Torsionsfeder 82 sind nach oben weg gebogen und derart angeordnet, dass zwischen ihnen ein Zwischenraum 88 ausgebildet ist. In diesen Zwischenraum 88 ragt das der Schwenkeinheit 14 abgewandte Ende des Stabes 28 hinein. Ferner ist in diesem Zwischenraum 88 auch ein fest mit dem Stativgrundkörper 12 verbundener Vorsprung 90 angeordnet.

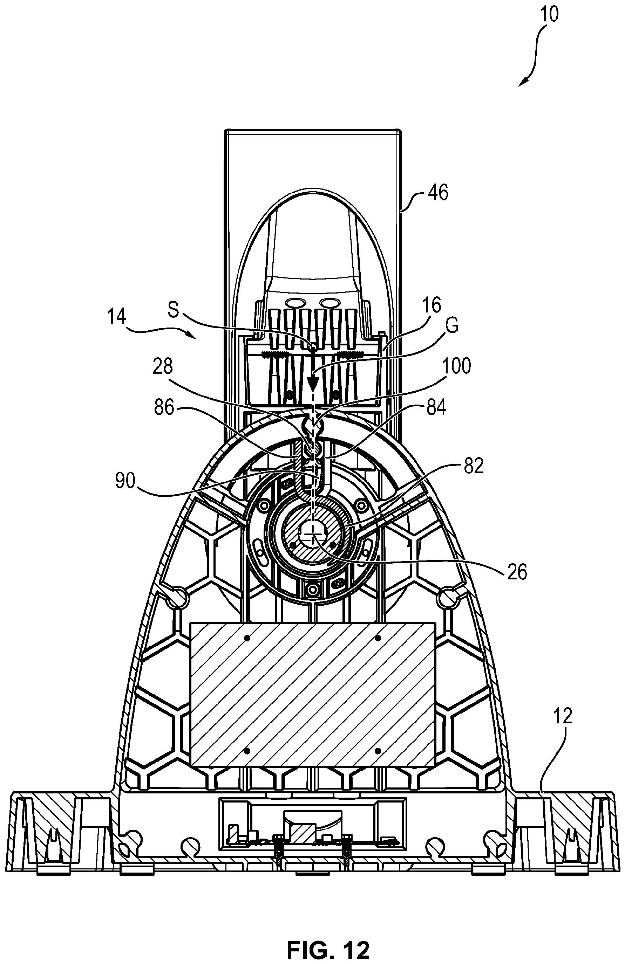

In den Figuren 12 bis 14 ist jeweils eine Schnittdarstellung des Mikroskops 10 dargestellt, wobei der Schnitt derart gelegt ist, dass das mit Blickrichtung von der Rückseite gesehen vordere Ende 86 geschnitten ist. In Figur 12 ist hierbei die Schwenkeinheit 14 in der Nullposition angeordnet. Bei dieser Nullposition kontaktiert der Stab 90 keines der beiden Federenden 84, 86 und die Torsionsfeder 82 ist nicht gespannt, so dass von ihr keine Kraft und kein Moment auf die Schwenkeinheit 14 ausgeübt wird.

Betrachtet man die Gewichtskraft der Schwenkeinheit 14 als eine konzentrierte Kraft G, die im Schwerpunkt S der Schwenkeinheit 14 angreift, so verläuft in der Nullposition das Lot dieser Kraft G, das sogenannte Schwerpunktlot 100, durch die Drehachse 26 der Schwenkeinheit 14, so dass durch die Gewichtskraft G kein Drehmoment um die Drehachse 26 erzeugt wird.

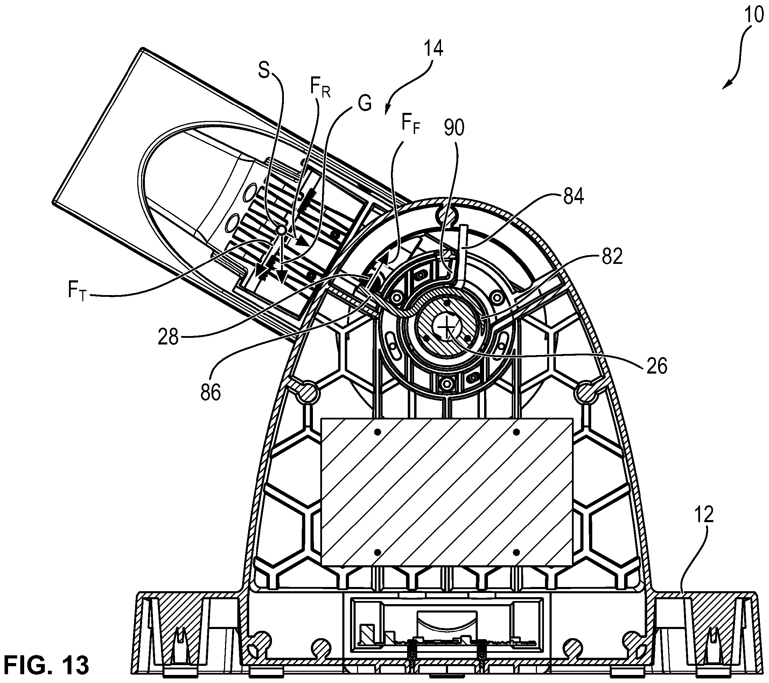

Bei Figur 13 ist die Schwenkeinheit 14 um etwa 60° nach links in eine erste Richtung aus der Nullposition verschwenkt. Die Torsionsfeder 82 stützt sich mit ihrem zweiten Ende 86 an dem Vorsprung 90 ab, wobei das andere Ende 84 der Torsionsfeder über den Stab 28 mitbewegt wird, so dass die Torsionsfeder 82 gespannt wird und eine Rückstellkraft $F_F$ auf den Stab 28 und somit die Schwenkeinheit 14 ausübt.

Wenn die Schwenkeinheit 14 aus der Nullposition verschwenkt ist, so ist das Schwerpunktlot 100 nicht mehr derart gerichtet, dass es die Drehachse 26 schneidet. Vielmehr kann die Gewichtskraft G entsprechend eines Kräfteparallelogramms auf eine Radialkraft $F_R$ und eine Tangentialkraft $F_T$ aufgeteilt werden. Diese Radialkraft $F_R$ ist in Richtung der Drehachse 26 gerichtet, so dass durch sie kein Drehmoment um die Drehachse 26 erzeugt wird. Die Tangentialkraft $F_T$ dagegen erzeugt ein entsprechendes Drehmoment (Tangential moment) $M_T$ um die Drehachse 26, durch das die Schwenkeinheit 14 nach unten gezogen wird.

Die Rückstellkraft $F_F$ der Feder ist entgegengesetzt der Tangentialkraft $F_T$ und parallel zu dieser gerichtet, so dass diese ebenfalls ein Drehmoment, das sogenannte Rückstellmoment $M_R$, um die Drehachse 26 erzeugt, wobei dieses jedoch dem Tangentialmoment $M_T$ entgegengerichtet ist und somit als Gegenmoment bezeichnet wird. Das aus dem durch die Tangentialkraft $F_T$ erzeugten Drehmoment $M_T$ und dem Gegenmoment resultierende Moment ist somit geringer als das durch die Tangentialkraft $F_T$ erzeugte Tangentialmoment $M_T$. Dies hat zur Folge, dass eine Bedienperson zum Bewegen der Schwenkeinheit 14 in Richtung der Nullposition eine geringere Kraft aufbringen muss. Darüber hinaus kann die Bremseinheit 22 kleiner dimensioniert werden, da durch sie zur Feststellung der Schwenkeinheit 14 in einer gewünschten Position somit nur noch eine geringere Bremskraft aufgebracht werden muss, welche nämlich nur das resultierende Moment ausgleichen muss.

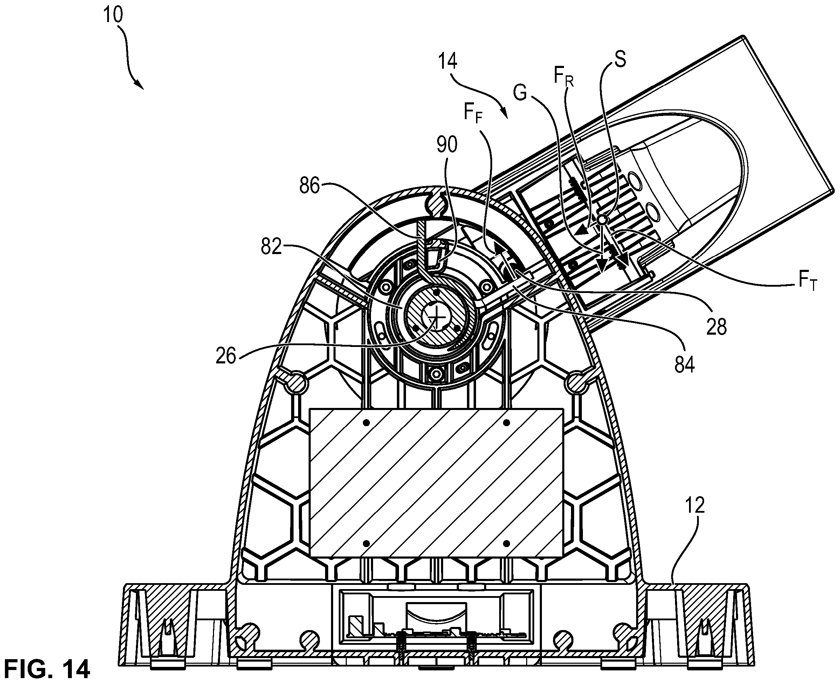

In Figur 14 ist die Auslenkung der Schwenkeinheit 14 in die bezogen auf die Auslenkung nach Figur 13 gesehenen entgegengesetzte Richtung gezeigt. In diesem Fall stützt sich das erste Ende 84 der Feder an dem Vorsprung 90 ab, wogegen das zweite Ende 86 der Feder durch den Stab 28 mitgenommen wird. Durch die symmetrische Ausbildung der Torsionsfeder 82 und der symmetrischen Anordnung wird wiederum ein Rückstellmoment $M_{RF}$ erzeugt, das dem Tangentialmoment $M_T$ der Schwenkeinheit 14 entgegengerichtet ist und die gleiche Größe hat, wie bei der gleichen Auslenkung in die andere Richtung. Durch die Stärke der verwendeten Torsionsfeder 82 kann eingestellt werden, wie groß die Rückstellkraft und somit das Rückstellmoment $M_R$ ausgebildet sind und somit wie groß das verbleibende resultierende Moment ist.

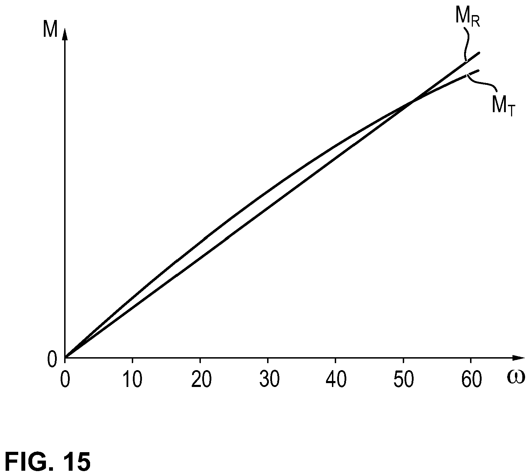

Bei einer in Figur 15 gezeigten ersten Ausführungsform ist die Torsionsfeder 82 derart gewählt, dass, das Rückstellmoment $M_R$ bei einem Verschwenken von 50° aus der Nullposition in etwa gleich groß wie das Tangentialmoment $M_T$ ist, so dass kein resultierendes Moment verbleibt. Bei einem Verschwenken von mehr als 50° aus der Nullposition ist das Rückstellmoment $M_R$ größer als das Tangentialmoment $M_T$, so dass sich ein negatives resultierendes Moment ergibt.

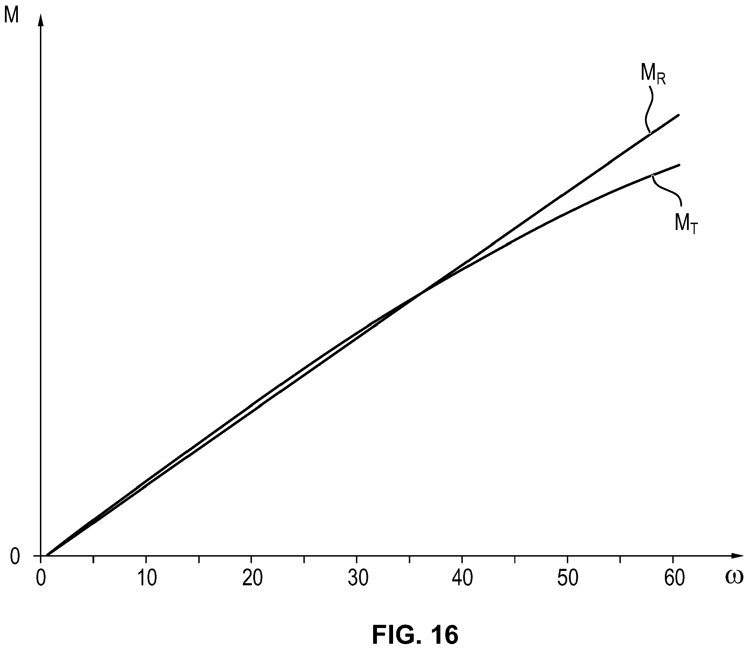

Bei einer in Figur 16 gezeigten zweiten Ausführungsform ist die Torsionsfeder 82 derart gewählt, dass, das Rückstellmoment $M_R$ bei einem Verschwenken von 38° aus der Nullposition in etwa gleich groß wie das Tangentialmoment $M_T$ ist, so dass kein resultierendes Moment verbleibt. Bei einem Verschwenken von mehr als 38° aus der Nullposition ist das Rückstellmoment $M_R$ größer als das Tangentialmoment $M_T$, so dass sich ein negatives resultierendes Moment ergibt.

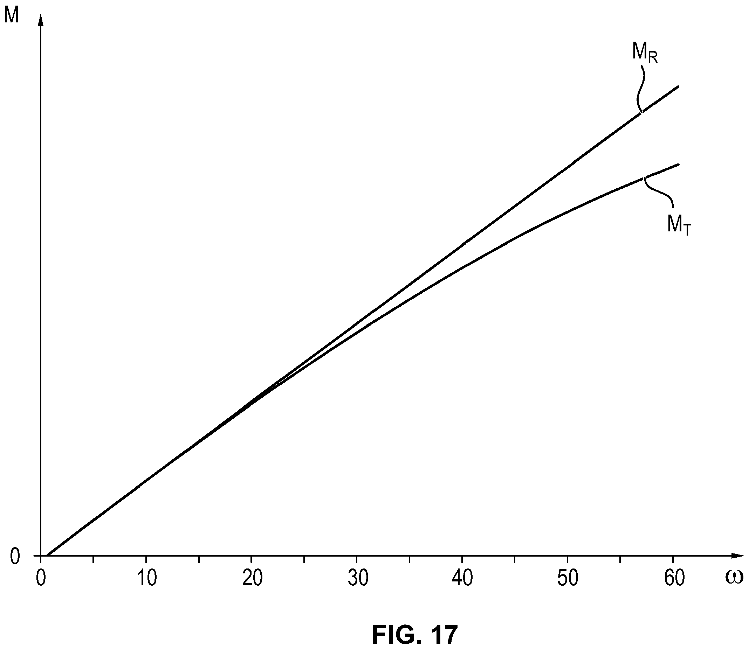

Bei einer in Figur 17 gezeigten dritten Ausführungsform ist die Torsionsfeder 82 derart gewählt, dass, das Rückstellmoment $M_R$ immer gleich groß oder größer als das Tangentialmoment $M_T$ ist, so dass das resultierende Moment immer kleiner oder gleich Null ist.

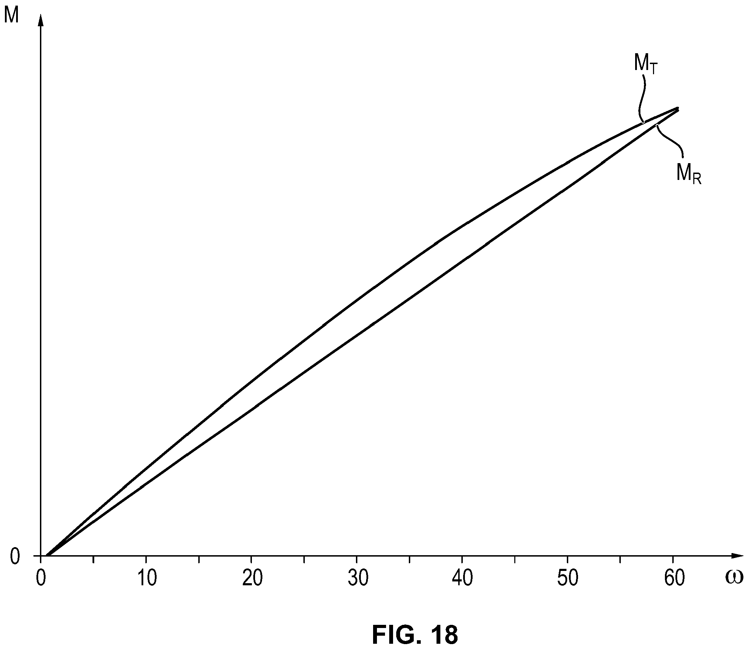

Bei einer in Figur 18 gezeigten vierten Ausführungsform ist die Torsionsfeder 82 derart gewählt, dass, das Rückstellmoment $M_R$ immer kleiner als das Tangentialmoment $M_T$ oder gleich dem Tangentialmoment $M_T$ ist, so dass das resultierende Moment immer größer Null ist. Bei dieser Ausführungsform wird anders als bei den anderen Ausführungsformen zwar nicht erreicht, dass das Anschlagen der Schwenkeinheit 16 an einen Anschlag zur Begrenzung des maximalen Schwenkwinkels der Schwenkeinheit 16 vermieden, jedoch bewirkt auch diese Ausführungsform, dass die Bedienperson zum Verschwenken eine geringe Kraft aufbringen muss und auch die notwendige Bremskraft der Bremseinheit 22 geringer ist. Insbesondere ist bei einem Verschwenken um dem maximal möglichen Winkel aus der Nullposition das Rückstellmoment $M_R$ genauso groß wie das Tangentialmoment $M_T$.

Bei alle Ausführungsformen ist die Torsionsfeder derart gewählt, dass über den gesamten Schwenkbereich das Rückstellmoment $M_R$ dem 0,8-fachen bis 1,2-fachen des Tangentialmomentes $M_T$ entspricht. Somit wird erreicht, dass das resultierende Moment $M_R$ immer maximal +/-20% des Tangentialmoments $M_T$ beträgt, und somit die von der Bedienperson bzw. der Bremseinheit 22 aufzubringende Kraft stets gering ist und ein Wegschnellen der Schwenkeinheit 22 beim Lösen der Bremseinheit 22 in beiden Richtungen vermieden wird.

Bei einer alternativen Ausführungsform der Erfindung können statt der Torsionsfeder 82 auch andere Arten von Federn und andere elastische Elemente verwendet werden.

**Bezugszeichenliste**

| | |
|---|---|
| 10 | Mikroskop |
| 12 | Stativgrundkörper |
| 14 | Schwenkeinheit |
| 15 | optische Achse |
| 16 | Gehäuse |
| 18 | Mikroskoptisch |
| 20 | Stellräder |
| 22 | Bremseinheit |
| 24 | Welle |
| 26 | Drehachse |
| 28 | Stab |
| 30 | Kulisse |
| 32 bis 38 | Radialkolben |
| 32a bis 38a | Stirnfläche |
| 40 | Feder |
| 42 | Kontaktfläche |
| 44 | Betätigungselement |
| 46 | Hebel |

| 48, 50 | Zwischenelement |
|---|---|
| 52 | Schwenkachse |
| 54, 56 | Absatz |
| 60 | Stift |
| 62 | Aussparung |
| 64 | Ring |
| 66 | Feder |
| 68 | Verbindungsstift |
| 70 | Langloch |
| 72 | Ende |
| 80 | Wellenstumpf |
| 82 | Torsionsfeder |
| 84, 86 | Ende |
| 88 | Zwischenraum |
| 90 | Vorsprung |
| 100 | Schwerpunktlot |
| F1, $F_F$, $F_R$, $F_T$, G | Kraft |
| $M_R$, $M_T$ | Moment |
| S | Schwerpunkt |
| P1 bis P3 | Richtung |

**Patentansprüche**

1.  Digitales Mikroskop umfassend,
    einen stationären Stativgrundkörper (12),
    eine auf einer Welle (24) des Stativgrundkörpers (12) um die Längsachse (26) der Welle (24) verschwenkbar gelagerten Schwenkeinheit (14), die eine Bilderfassungseinheit zur Aufnahme von Bildern zur mikroskopierender Objekte umfasst,
    eine Bremseinheit (22) zum Bremsen und/oder Feststellen der Schwenkeinheit (14), und
    ein Betätigungselement (44) zum Lösen der Bremseinheit (22), die Schwenkeinheit (14) ein erstes Verbindungselement (60) umfasst,
    der Stativgrundkörper (12) ein zweites Verbindungselement (62) umfasst, **dadurch gekennzeichnet, dass** das erste Verbindungselement (60) und das zweite Verbindungselement (62) nur dann gekoppelt sind, wenn die Schwenkeinheit (14) in einer vorbestimmten Nullposition angeordnet ist und das Betätigungselement (44) entweder in einer unbetätigten Grundposition angeordnet ist, oder innerhalb eines vorbestimmten ersten Betätigungsbereichs betätigt ist, und dass, wenn die Schwenkeinheit (14) in der Nullposition angeordnet ist und wenn das Betätigungselement (44) innerhalb eines vorbestimmten zweiten Betätigungsbereiches, der vom ersten Betätigungsbereich verschieden ist und sich mit diesem auch nicht überschneidet, betätigt ist, das erste Verbindungselement (60) und das zweite Verbindungselement (62) nicht gekoppelt sind.

2.  Mikroskop (10) nach Anspruch 1, **dadurch gekennzeichnet, dass** der erste Betätigungsbereich zwischen der Grundposition und dem zweiten Betätigungsbereich liegt.

3.  Mikroskop (10) nach Anspruch 1 oder 2, **dadurch gekennzeichnet, dass** sowohl bei einer Betätigung des Betätigungselements (44) innerhalb des ersten Betätigungsbereiches als auch bei einer Betätigung des Betätigungselements (44) innerhalb des zweiten Betätigungsbereiches die Bremseinheit (22) zumindest so weit gelöst ist, dass ein Verschwenken der Schwenkeinheit (14) möglich ist.

4.  Mikroskop (10) nach einem der vorhergehenden Ansprüche, **dadurch gekennzeichnet, dass** das Betätigungselement (44) um einen vorbestimmten maximale Betätigungsweg aus der Grundposition bewegbar ist, und dass der erste Betätigungsbereich in etwa die erste Hälfte dieses maximalen Betätigungsweges abdeckt.

5.  Mikroskop (10) nach einem der vorhergehenden Ansprüche, **dadurch gekennzeichnet, dass** die Kopplung zwischen dem ersten und dem zweiten Verschwenken der Schwenkeinheit (14) aus der Nullposition automatisch löst und/oder beim Schwenken der Schwenkeinheit (14) in die Nullposition automatisch ausbildet, sofern das Betätigungselement (44) innerhalb des ersten Betätigungsbereiches betätigt ist.

**6.** Mikroskop (10) nach Anspruch 5, **dadurch gekennzeichnet, dass** die Verbindung derart ausgebildet ist, dass beim Lösen und/oder Herstellen der Verbindung beim Schwenken der Schwenkeinheit (14) ein akustisches, haptisches und/oder optisches Signal, insbesondere ein "click", ausgegeben wird.

**7.** Mikroskop (10) nach einem der vorhergehenden Ansprüche, **dadurch gekennzeichnet, dass** das erste Verbindungselement (60) entlang eines vorbestimmten Weges bewegbar, insbesondere linear verschiebbar angeordnet ist, dass das erste Verbindungselement (60), wenn das Betätigungselement in der Grundposition angeordnet ist, in einer Ausgangsposition angeordnet ist, in der das erste Verbindungselement (60) in das zweite Verbindungselement (62) eingreift, sofern die Schwenkeinheit (14) in der Nullposition angeordnet ist, und dass das erste Verbindungselement (60) derart mit dem Betätigungselement (44), insbesondere rein mechanisch, gekoppelt ist, dass bei einer Betätigung des Betätigungselements (44) innerhalb des ersten Betätigungsbereichs das erste Verbindungselement (60) zumindest teilweise in das zweite Verbindungselement (62) einrastet, sofern die Schwenkeinheit (14) in der Nullposition angeordnet ist, und bei einer Betätigung des Betätigungselements (44) innerhalb des zweiten Betätigungsbereichs das erste Verbindungselement (60) nicht in das zweite Verbindungselement (62) einrastet, selbst wenn die Schwenkeinheit (14) in der Nullposition angeordnet ist.

**8.** Mikroskop (10) nach Anspruch 7, **dadurch gekennzeichnet, dass** das erste Verbindungselement (60) über ein elastisches Element (66), insbesondere eine Feder, in der Ausgangsposition vorgespannt ist.

**9.** Mikroskop (10) nach einem der vorhergehenden Ansprüche, **dadurch gekennzeichnet, dass** das erste Verbindungselement (60) als ein Stift, insbesondere ein Stift mit einem halbkugelförmigen Ende (72), und/oder das zweite Verbindungselement (62) als eine Aussparung, insbesondere eine halbkugelförmige Aussparung, ausgebildet ist.

**10.** Mikroskop (10) nach Anspruch 9, **dadurch gekennzeichnet, dass** der Stift (60) ein Langloch (70) aufweist, in das ein mit dem Betätigungselement (44) fest verbundener weiterer Stift eingreift, wobei das Langloch (70) derart ausgebildet ist, dass der weitere Stift bei einer Betätigung des Betätigungselements (44) innerhalb des ersten Betätigungsbereichs innerhalb des Langlochs (70) bewegt wird, ohne den einen Stift (60) zu bewegen.

**11.** Mikroskop (10) nach einem der vorhergehenden Ansprüche, **dadurch gekennzeichnet, dass** die Bremseinheit (22) ein mit Hilfe eines elastischen Elements (40) in einer Bremsposition vorgespanntes Bremselement (32 bis 38) umfasst, das in der Bremsposition die Welle (24) kontaktiert, dass das Bremselement (32 bis 38) durch manuelle Betätigung des Betätigungselements (32 bis 38) entgegen der Rückstellkraft des elastischen Elements (40) von der Bremsposition in eine gelöste Position bewegbar ist, und dass das Betätigungselement (44) über eine Kopplungseinheit mit dem Bremselement (32 bis 38) gekoppelt ist.

**12.** Mikroskop (10) nach einem der vorhergehenden Ansprüche, **dadurch gekennzeichnet, dass** ein weiteres elastisches Element (82) vorgesehen ist, dessen Rückstellmoment beim Verschwenken der Schwenkeinheit (14) aus einer vorbestimmten Nullposition zumindest in einem Teilbereich des Schwenkbereichs der Schwenkeinheit (14) die folgende Gleichung erfüllt:

$$M_R >= M_T$$

$M_R$=Rückstellmoment des elastischen Elements (82)
$M_T$=Tangentialmoment der Gewichtskraft (G) der Schwenkeinheit (14).

**13.** Mikroskop (10) nach einem der vorhergehenden Ansprüche, **dadurch gekennzeichnet, dass** das die Welle (24) hohl ist.

**14.** Mikroskop (10) nach einem der vorhergehenden Ansprüche, **dadurch gekennzeichnet, dass** die Schwenkeinheit (14) ein Zoomsystem und/oder ein Objektivsystem mit mehreren wahlweise in den Strahlengang verbringbaren Objektiven umfasst.

**Claims**

**1.** A digital microscope, comprising:

a stationary stand body (12),

a pivot unit (14) mounted on a shaft (24) of the stand body (12) to be pivotable about the longitudinal axis (26) of the shaft (24), said pivot unit comprising an image detecting unit for taking images of objects to be microscoped,

a brake unit (22) for braking and/or locking the pivot unit (14), and

an operating element (44) for releasing the brake unit (22),

the pivot unit (14) comprising a first connecting element (60),

the stand body (12) comprising a second connecting element (62),

**characterized in that**

the first connecting element (60) and the second connecting element (62) are coupled only if the pivot unit (14) is arranged at a predetermined zero position, and the operating element (44) is arranged either at a home position where it is not operated, or is operated within a predetermined first operation range,

and **in that** the first connecting element (60) and the second connecting element (62) are not coupled if the pivot unit (14) is arranged at the zero position and if the operating element (44) is operated within a predetermined second operation range, which is different from the first operation range and does further not overlap with the same.

2. The microscope (10) according to claim 1, **characterized in that** the first operation range is between the home position and the second operation range.

3. The microscope (10) according to claim 1 or 2, **characterized in that** the brake unit (22) is released at least to such an extent that pivoting of the pivot unit (14) is allowed, with both, operation of the operating element (44) within the first operation range and operation of the operating element (44) within the second operation range.

4. The microscope (10) according to any one of the preceding claims, **characterized in that** the operating element (44) is movable by a predetermined maximum operation distance from the home position, and **in that** the first operation range covers approximately the first half of this maximum operation distance.

5. The microscope (10) according to any one of the preceding claims, **characterized in that** coupling automatically releases between the first and second pivoting of the pivot unit (14) from the zero position, and/or automatically forms upon pivoting of the pivot unit (14) to the zero position, provided that the operating element (44) is operated within the first operation range.

6. The microscope (10) according to claim 5, **characterized in that** the connection is formed such that when releasing and/or establishing the connection an acoustic, haptic and/or optical signal, in particular a "click" is emitted upon pivoting of the pivot unit (14).

7. The microscope (10) according to any of the preceding claims, **characterized in that** the first connecting element (60) is arranged movably along a predetermined path, in particular linearly displaceably, **in that**, when the operating element is arranged at the home position, the first connecting element (60) is arranged at an initial position in which the first connecting element (60) engages the second connecting element (62), when the pivot unit (14) is arranged at the zero position, and **in that** the first connecting element (60) is coupled, in particular purely mechanically, with the operating element (44) such that upon operation of the operating element (44) within the first operation range, the first connecting element (60) at least partially clicks into the second connecting element (62), when the pivot unit (14) is arranged at the zero position, and **in that** upon operation of the operating element (44) within the second operation range, the first connecting element (60) does not click into the second element (62), even if the pivot unit (14) is arranged at the zero position.

8. The microscope (10) according to claim 7, **characterized in that** the first connecting element (60) is biased in the initial position via an elastic element (66), in particular via a spring.

9. The microscope (10) according to any one of the preceding claims, **characterized in that** the first connecting element (60) is formed as one pin, in particular as a pin having a hemispherical end (72), and/or the second connecting element (62) is formed as an opening, in particular as a hemispherical opening.

10. The microscope (10) according to claim 9, **characterized in that** the pin (60) has an elongated hole (70) into which a further pin engages which is fixedly connected with the operating element (44), the elongated hole (70) being formed such that, upon operation of the operating element (44) within the first operation range, the further pin is moved within the elongated hole (70) without moving the one pin (60).

**11.** The microscope (10) according to any one of the preceding claims, **characterized in that** the brake unit (22) comprises a brake element (32 to 38) biased in a braking position by means of an elastic element (40) and contacting the shaft in the braking position, **in that** the brake element (32 to 38) is movable from the braking position into a released position against the return force of the elastic element by manual operation of the operating element, and **in that** the operating element (44) is coupled to the brake element (32 to 38) via a coupling unit.

**12.** The microscope (10) according to any one of the preceding claims, **characterized in that** a further elastic element (82) is provided whose restoring moment satisfies the following equation when the pivot unit (14) pivots from a predetermined zero position, at least within a part of the pivot range of the pivot unit (14):

$$M_R >= M_T$$

$M_R$ = restoring moment of the elastic element (82)
$M_T$ = tangential momentum of the weight (G) of the pivot unit (14).

**13.** The microscope (10) according to any one of the preceding claims, **characterized in that** the shaft (24) is hollow.

**14.** The microscope (10) according to any one of the preceding claims, **characterized in that** the pivot unit (14) is a zooming system and/or an objective lens system having a plurality of lenses which can selectively be brought into the optical path.

**Revendications**

**1.** Microscope numérique comprenant
un corps de base de support (12) fixe,
une unité pivotante (14) qui est montée sur un arbre (24) du corps de base de support (12) de manière à pouvoir pivoter autour de l'axe longitudinal (26) de l'arbre (24) et qui comporte une unité d'acquisition d'images pour l'enregistrement d'images à examiner au microscope,
une unité de freinage (22) pour le freinage et/ou le blocage de l'unité pivotante (14), et
un élément d'actionnement (44) pour le déblocage de l'unité de freinage (22),
l'unité pivotante (14) comporte un premier élément de liaison (60),
le corps de base de support (12) comporte un deuxième élément de liaison (62),
**caractérisé en ce que**
le premier élément de liaison (60) et le deuxième élément de liaison (62) ne sont accouplés que lorsque l'unité pivotante (14) est agencée dans une position nulle prédéfinie et que l'élément d'actionnement (44) est soit agencé dans une position de base non actionnée, soit actionné à l'intérieur d'une première zone d'actionnement prédéfinie, et **en ce que**, lorsque l'unité pivotante (14) est agencée dans la position nulle et que l'élément d'actionnement (44) est actionné à l'intérieur d'une deuxième zone d'actionnement prédéfinie, qui est différente de la première zone d'actionnement et qui n'empiète pas non plus sur celle-ci, le premier élément de liaison (60) et le deuxième élément de liaison (62) ne sont pas accouplés.

**2.** Microscope (10) selon la revendication 1, **caractérisé en ce que** la première zone d'actionnement se situe entre la position de base et la deuxième zone d'actionnement.

**3.** Microscope (10) selon la revendication 1 ou 2, **caractérisé en ce que** l'unité de freinage (22) est débloquée au moins à un point tel qu'un pivotement de l'unité pivotante (14) est possible, aussi bien lors d'un actionnement de l'élément d'actionnement (44) à l'intérieur de la première zone d'actionnement que lors d'un actionnement de l'élément d'actionnement (44) à l'intérieur de la deuxième zone d'actionnement.

**4.** Microscope (10) selon l'une quelconque des revendications précédentes, **caractérisé en ce que** l'élément d'actionnement (44) peut être déplacé à partir de la position de base le long d'un trajet d'actionnement maximal prédéfini, et **en ce que** la première zone d'actionnement recouvre sensiblement la première moitié de ce trajet d'actionnement maximal.

**5.** Microscope (10) selon l'une quelconque des revendications précédentes, **caractérisé en ce que** l'accouplement entre le premier et le deuxième pivotement de l'unité pivotante (14) se libère automatiquement à partir de la position nulle et/ou se forme automatiquement lorsque l'unité pivotante (14) pivote dans la position nulle, pour autant que l'élément d'actionnement (44) soit actionné à l'intérieur de la première zone d'actionnement.

6. Microscope (10) selon la revendication 5, **caractérisé en ce que** la liaison est conçue de telle manière que, lorsque la liaison est libérée et/ou établie, lors du pivotement de l'unité pivotante (14), un signal acoustique, haptique et/ou optique, en particulier un « clic », est délivré.

7. Microscope (10) selon l'une quelconque des revendications précédentes, **caractérisé en ce que** le premier élément de liaison (60) est agencé de manière à pouvoir se déplacer, en particulier de manière à pouvoir coulisser linéairement le long d'un trajet prédéfini, **en ce que** le premier élément de liaison (60), lorsque l'élément d'actionnement est agencé dans la position de base, est agencé dans une position initiale dans laquelle le premier élément de liaison (60) s'insère dans le deuxième élément de liaison (62) pour autant que l'unité pivotante (14) soit agencée dans la position nulle, et **en ce que** le premier élément de liaison (60) est accouplé à l'élément d'actionnement (44), en particulier de manière purement mécanique, de telle sorte que lors d'un actionnement de l'élément d'actionnement (44) à l'intérieur de la première zone d'actionnement, le premier élément de liaison (60) s'encliquète au moins en partie dans le deuxième élément de liaison (62), pour autant que l'unité pivotante (14) soit agencée dans la position nulle, et lors d'un actionnement de l'élément d'actionnement (44) à l'intérieur de la deuxième zone d'actionnement, le premier élément de liaison (60) ne s'encliquète pas dans le deuxième élément de liaison (62), même si l'unité pivotante (14) est agencée dans la position nulle.

8. Microscope (10) selon la revendication 7, **caractérisé en ce que** le premier élément de liaison (60) est précontraint dans la position initiale au moyen d'un élément élastique (66), en particulier d'un ressort.

9. Microscope (10) selon l'une quelconque des revendications précédentes, **caractérisé en ce que** le premier élément de liaison (60) est réalisé sous la forme d'une tige, en particulier d'une tige présentant une extrémité (72) hémisphérique, et/ou le deuxième élément de liaison (62) est réalisé sous la forme d'un évidement, en particulier d'un évidemment semi-sphérique.

10. Microscope (10) selon la revendication 9, **caractérisé en ce que** la tige (60) présente un trou oblong (70) dans lequel s'insère une autre tige reliée fixement à l'élément d'actionnement (44), le trou oblong (70) étant conçu de telle manière que l'autre tige, lors d'un actionnement de l'élément d'actionnement (44), est déplacé dans la première zone d'actionnement à l'intérieur du trou oblong (70), sans déplacer la tige (60).

11. Microscope (10) selon l'une quelconque des revendications précédentes, **caractérisé en ce que** l'unité de freinage (22) comporte un élément de freinage (32 à 38) qui est précontraint dans une position de freinage à l'aide d'un élément élastique (40) et qui est en contact avec l'arbre (24) dans la position de freinage, **en ce que** l'élément de freinage (32 à 38), à la suite d'un actionnement manuel de l'élément d'actionnement (32 à 38) à l'encontre de la force de rappel de l'élément élastique (40), peut être déplacé de la position de freinage dans une position débloquée, et **en ce que** l'élément d'actionnement (44) est accouplé à l'élément de freinage (32 à 38) au moyen d'une unité d'accouplement.

12. Microscope (10) selon l'une quelconque des revendications précédentes, **caractérisé en ce qu'**un autre élément élastique (82) est prévu, dont le moment de rappel, lors du pivotement de l'unité pivotante (14) d'une position nulle prédéfinie au moins dans une partie de la zone de pivotement de l'unité pivotante (14), satisfait l'équation suivante :

$$M_R >= M_T$$

$M_R$=moment de rappel de l'élément élastique (82)
$M_T$=moment tangentiel du poids (G) de l'unité pivotante (14).

13. Microscope (10) selon l'une quelconque des revendications précédentes, **caractérisé en ce que** l'arbre (24) est creux.

14. Microscope (10) selon l'une quelconque des revendications précédentes, **caractérisé en ce que** l'unité pivotante (14) comporte un système de zoom et/ou un système d'objectif comprenant plusieurs objectifs pouvant être amenés sélectivement dans la trajectoire du faisceau.

**FIG. 1**

FIG. 2

**FIG. 3**

**FIG. 4**

**FIG. 5**

FIG. 6

FIG. 7

**FIG. 8**

**FIG. 9**

**FIG. 10**

FIG. 11

**FIG. 12**

FIG. 13

EP 3 006 983 B1

**FIG. 14**

EP 3 006 983 B1

FIG. 15

**FIG. 16**

EP 3 006 983 B1

**FIG. 17**

EP 3 006 983 B1

**FIG. 18**

EP 3 006 983 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2012018812 A
- EP 1248133 A2
- JP 2005143970 A